(19) Europäisches Patentamt
European Patent Office
Office européen des brevets

(11) **EP 3 408 431 B1**

(12) **EUROPÄISCHE PATENTSCHRIFT**

(45) Veröffentlichungstag und Bekanntmachung des Hinweises auf die Patenterteilung:
**16.09.2020 Patentblatt 2020/38**

(21) Anmeldenummer: **17701157.4**

(22) Anmeldetag: **25.01.2017**

(51) Int Cl.:
*C25F 3/04* (2006.01)     *C22C 21/00* (2006.01)

(86) Internationale Anmeldenummer:
**PCT/EP2017/051526**

(87) Internationale Veröffentlichungsnummer:
**WO 2017/129609 (03.08.2017 Gazette 2017/31)**

(54) **ALUMINIUMLEGIERUNGSBAND FÜR KLEBSTOFFVERBINDUNG**

ALUMINIUM ALLOY TAPE FOR ADHESIVE JOINING

BANDE D'ALLIAGE D'ALUMINIUM POUR JOINT DE COLLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2016 EP 16152890**

(43) Veröffentlichungstag der Anmeldung:
**05.12.2018 Patentblatt 2018/49**

(73) Patentinhaber: **Hydro Aluminium Rolled Products GmbH**
**41515 Grevenbroich (DE)**

(72) Erfinder:
• **KERNIG, Bernhard**
**50969 Köln (DE)**
• **BRINKMAN, Henk-Jan**
**53175 Bonn (DE)**
• **ECKHARD, Kathrin**
**53347 Alfter (DE)**
• **NITZSCHE, Gernot**
**53340 Meckenheim (DE)**
• **HIRSCHMANN, Frank**
**41334 Nettetal (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**US-A1- 2008 102 404**

**Beschreibung**

Die Erfindung betrifft ein Band aus einer Aluminiumlegierung und dessen Verwendung zur Bereitstellung von Klebstoffverbindungen, insbesondere Klebstoffverbindungen in Kraftfahrzeugen. Daneben betrifft die Erfindung ein Verfahren zur Herstellung eines Bands mit einer zumindest bereichsweise vorgesehenen, für eine Klebstoffverbindung vorbereiteten ein- oder beidseitigen Oberflächenstruktur aus einer Aluminiumlegierung sowie eine entsprechende Klebstoffverbindung.

In der Automobilindustrie werden zunehmend Bleche aus Aluminiumlegierungen eingesetzt, um Gewichtseinsparpotentiale im Kraftfahrzeugbau zu realisieren. Bänder und Bleche für die Herstellung von Kraftfahrzeugbauteilen werden üblicherweise aus Aluminiumlegierungen vom Typ AA7xxx, Typ AA6xxx, vom Typ AA5xxx oder vom Typ AA3xxx hergestellt. Sie zeichnen sich durch mittelhohe bis sehr hohe Festigkeiten und ein sehr gutes Umformverhalten aus. Bisher werden Bleche aus Aluminiumlegierungen für Kraftfahrzeuge mechanisch durch Einprägen einer speziellen Walzentopografie im letzten Kaltwalzstich mit einer Oberflächenfeinstruktur versehen, um das Reibverhalten im späteren Umformprozess positiv zu beeinflussen.

Um Bleche aus einer Aluminiumlegierung im Kraftfahrzeugbau einzusetzen, müssen diese mit weiteren Bauteilen verbunden, vorzugsweise stoffschlüssig gefügt werden. Als Fügetechnik kommen insbesondere Schweiß-, Löt- aber auch Klebstoffverbindungen in Betracht. Der Einsatz von Klebstoffverbindungen hat den Einsatz von Aluminiumlegierungen im Kraftfahrzeugbau entscheidend vorangetrieben, da ohne große Probleme stoffschlüssige Verbindungen der Aluminiumlegierungen mit unterschiedlichen Materialien bereitgestellt werden können. Von Vorteil ist zudem, dass Klebstoffverbindungen üblicherweise keine hohen Temperaturen zur Aushärtung der Klebstoffverbindungen benötigen und daher bei naturharten Al-Werkstoffen keine Entfestigungsvorgänge im Aluminium mit der Bereitstellung von Klebstoffverbindungen verbunden sind. Bei aushärtbaren Al-Werkstoffen liegt der Vorteil darin, dass während des thermischen Aushärtens des Klebstoffs die Festigkeit im Werkstoff ansteigt. Bei einem Lackeinbrennschritt härtet der Klebstoff aus und die Festigkeit im Werkstoff steigt an. Die Verbindung wird durch eine dünne Klebstoffschicht bereitgestellt, welche nach dem Aushärten Adhäsion- und Kohäsionseigenschaften besitzt. Die Adhäsion bestimmt die Festigkeit der Verbindung zwischen dem Klebstoff und dem Metall also an der Grenzflächenschicht zum Metall, während die Kohäsion die Bindungskräfte zwischen den einzelnen Molekülen des Klebstoffs selbst beschreibt. Um das Potenzial des Klebstoffs in Bezug auf die erreichbare Haltekraft von Klebstoffverbindungen zu erreichen, wird angestrebt, dass die Adhäsionskräfte, also die Kräfte zwischen dem Klebstoff und der Metalloberfläche, größer sind als die Kohäsionskräfte des Klebstoff selbst. Die Adhäsionskräfte sind aber von der Metalloberfläche abhängig. Für das Kleben von Aluminiumlegierungen kommt daher der Oberflächenvorbehandlung des die Klebstoffverbindung aufweisenden Bereichs beispielsweise eines Aluminiumlegierungsbandes eine Schlüsselfunktion zu.

Zusätzlich bestimmt natürlich auch bei optimaler Oberflächenvorbereitung die Wahl des Klebstoffs die Eigenschaften der späteren Klebstoffverbindung. Diese Eigenschaften können auf die Anwendung spezifisch ausgewählt werden. Es gibt chemisch härtende Klebstoffe, die durch Polymerisation, Polyaddition oder Polykondensation aushärten, sowie physikalisch härtende Klebstoffe wie Schmelzklebstoffe, Dispersionsklebstoffe, Lösungsmittelklebstoffe, Kontaktklebstoffe oder Haftklebstoffe. Beispielsweise werden Epoxid-Klebstoffe, Epoxid/Polyimid-Blends, Polyurethan-Klebstoffe, Acrylat-Klebstoffe, Phenolharze oder auch silanmodifizierte Polymere verwendet. Bei der Auswahl des Klebstoffs sind die zu verbindenden Werkstoffe, der Anwendungsbereich, Umwelteinflüsse, Höhe und Art der möglichen Beanspruchung, die Steifigkeit der Fügeteile, die Überlappungslänge der Klebstoffverbindung sowie die erforderlichen Fertigungsverfahren zu berücksichtigen. Unterschieden werden beispielsweise Strukturklebstoffe, Anti-Flutter-Klebstoffe oder Klebstoffe zur Nahtabdichtung.

Die Alterungsbeständigkeit von Klebstoffverbindungen ist abhängig von der Oberflächenbehandlung der Aluminiumlegierungsbänder. Problematisch bei, abgesehen vom Einprägen einer Oberflächenstruktur, unbehandelten Aluminiumlegierungsbandoberflächen ist, dass diese üblicherweise eine reaktionsträge Oxidschicht aufweisen, welche durch die vorherigen Bearbeitungsschritte kontaminiert ist. Ein Klebstoff kann diese, nicht behandelte Oberfläche zwar benetzen und mit dieser eine Verbindung eingehen. Durch in den Klebstoff eindringende Feuchtigkeit werden jedoch Oxide aus der Oberfläche des unbehandelten Aluminiumlegierungsblechs herausgelöst und stehen für die Bereitstellung von Adhäsionskräften an dieser Stelle nicht mehr zur Verfügung. Insgesamt lässt damit die Festigkeit der Klebstoffverbindung vor allem bei Bewitterung, also unter Einfluss von Feuchtigkeit und/oder korrosiver Substanzen, langsam nach.

Bisher wurden beispielsweise Beizverfahren verwendet, um die kontaminierte Deckschicht des Aluminiumlegierungsblechs zu entfernen und gleichzeitig die Oberfläche beispielsweise durch entsprechende Beizzusätze im Sinne einer Konversionsschicht zu modifizieren. Alternativ kann eine Konversionsschicht auch durch Chromatieren erzeugt werden. Bevorzugt kommen heute jedoch chromfrei erzeugte Konversionsschichten, beispielsweise Konversionsschichten auf Ti/Zr-Basis zur Bereitstellung einer optimalen Klebstoffoberfläche zur Anwendung. Es ist auch ein weiteres Verfahren zur Bereitstellung einer vorbehandelten Oberfläche eines Aluminiumlegierungsblechs bekannt, bei welchem eine dünne, anodisierte Schicht auf dem Band oder Blech erzeugt wird, welche die Hafteigenschaften und die Dauerfestigkeit der Klebstoffverbindung verbessern soll. Diese Art von Dünnschichtanodisierung kann auch als Haftgrund für Lacke Anwendung finden. Sie wird beispielsweise in Phosphorsäure, Schwefelsäure-Phosphorsäure-Gemischen oder heißer Schwefelsäure durchgeführt.

Es handelt sich bei beiden Verfahren um einen zusätzlichen Verfahrensschritt, welcher neben der Bereitstellung von Oberflächeneigenschaften, die die Umformbarkeit verbessern sollen, am Blech oder Band angewendet werden muss und damit Kosten erzeugt.

Aus der US-Patentanmeldung US 2008/0102404 A1 ist ein elektro-chemisches Körnen einer Aluminiumoberfläche für die Herstellung von lithografischen Druckplattenträgern zur Aufrauung der Oberflächen bekannt. Das elektrochemische Körnen findet im Gegensatz zum elektro-chemischen Ätzen, welches Gleichstrom verwendet, unter Anwendung von Wechselstrom oder gepulstem Gleichstrom statt. Hierdurch wird erreicht, dass der Ätzprozess immer wieder unterbrochen wird und die Oberfläche nicht tief, beispielsweise tiefe Kanäle geätzt werden, sondern nur oberflächliche Mulden erzeugt werden, also ein Körnen oder Aufrauen der Oberfläche erreicht wird. Aus der US-Patentanmeldung US2005/0205167 A1 ist ein Verfahren zur Bereitstellung eines Bandes aus einer Aluminiumlegierung für Klebstoffverbindungen in Kraftfahrzeugen bekannt.

Hiervon ausgehend liegt der vorliegenden Erfindung die Aufgabe zu Grunde, ein für Klebstoffverbindungen optimiertes Aluminiumlegierungsband bereitzustellen, dass einerseits optimierte Oberflächeneigenschaften für alterungsbeständige Klebstoffverbindungen aufweist und das sich andererseits prozesssicher kostengünstig herstellen lässt. Gleichzeitig soll ein Verfahren zur Herstellung eines Bandes oder Blechs aus einer Aluminiumlegierung und eine alterungsbeständige Klebstoffverbindung angegeben werden.

Gemäß einer ersten Lehre der vorliegenden Erfindung wird die Aufgabe für ein Band aus einer Aluminiumlegierung zur Bereitstellung von Klebstoffverbindungen dadurch gelöst, dass das Band zumindest bereichsweise eine für Klebstoffverbindungen vorbereitete Oberflächenstruktur aufweist, wobei die Oberflächenstruktur Vertiefungen mit einer reduzierten Muldentiefe $S_{vk}$ von 1,0 $\mu$m bis 6,0 $\mu$m aufweist, welche unter Verwendung eines elektro-chemischen Körnungsverfahrens hergestellt worden sind.

Untersuchungen von durch ein elektro-chemisches Körnungsverfahren hergestellten Oberflächenstrukturen auf Aluminiumlegierungsbändern haben gezeigt, dass aufgrund der elektro-chemisch aufgerauten Oberfläche nicht nur die Haftkraft zwischen Klebstoff und Band gesteigert werden kann, sondern auch die Alterungsbeständigkeit der Klebstoffverbindung deutlich verbessert werden kann, so dass auf zusätzliche Arbeitsschritte verzichtet werden kann. Gleichzeitig bietet die elektro-chemisch gekörnte Oberfläche auch verbesserte Umformeigenschaften, da die Vertiefungen der Oberfläche des Aluminiumlegierungsbandes als Schmierstofftaschen dienen können, welche das Umformverhalten des Blechs deutlich verbessern, d.h. die tribologischen Eigenschaften des Blechs positiv beeinflussen. Die Oberfläche des Aluminiumlegierungsbandes kann beispielsweise weiterhin die beim Walzen entstandene, plateauartige Textur der Fertigwalzschritte aufweisen, welche mit unter Verwendung des elektro-chemischen Körnens in die Oberfläche eingebrachte Vertiefungen durchsetzt ist. Die beim elektro-chemischen Körnen in die Aluminiumlegierungsbänder eingebrachten Vertiefungen weisen im Vergleich zu den mechanischen Prägeverfahren große, abgeschlossene Einzelleervolumina, ein daraus resultierendes höheres eingeschlossenes Gesamtleervolumen und damit eine deutlich größere reduzierte Muldentiefe auf. Die Oberfläche weist neben der durch das Walzen zuvor eingebrachten Oberflächenstruktur, beispielsweise einer "Mill-finish"-Oberflächenstruktur, Vertiefungen auf, welche zum Teil sehr abrupt von der Oberfläche abfallen und teilweise Hinterschneidungen bzw. negative Öffnungswinkel aufweisen. Diese Ausgestaltung der Vertiefungen ist spezifisch auf das Herstellverfahren durch elektro-chemische Körnung zurückzuführen. Die Oberfläche unterscheidet sich daher auch deutlich von den durch Anodisierung oder Dünnschichtanodisierung erzeugten Bandoberflächen. Im Gegensatz zum Aufwachsen eines dünnen anodisierten Oxidfilms wird erfindungsgemäß Metall aus der Oberfläche des Aluminiumlegierungsbandes entfernt. Schließlich ist das elektro-chemische Körnen ein Verfahren, dass großtechnisch wirtschaftlich einsetzbar und damit für die Massenfertigung geeignet ist.

Bevorzugt weist das Band oder Blech aus einer Aluminiumlegierung eine Mindestdicke von 0,8 mm auf. Aluminiumlegierungsbänder mit einer Dicke von mindestens 0,8 mm werden häufig im Kraftfahrzeugbau eingesetzt und einem Umformprozess, beispielsweise einem Tiefziehen, unterzogen, um beispielsweise ein ebenes Blech in eine spezifische für die Anwendung benötigte Form zu bringen. Anschließend wird das umgeformte Blech mit anderen Bauteilen verklebt. Denkbar ist auch, dass die Klebstoffverbindung bereits vor der Umformung erzeugt wird und das Blech mit dem Bauteil gemeinsam umgeformt wird. Bevorzugte Dicken im Automobilbereich sind daneben auch 1,0 bis 1,5 mm oder bis 2,0 mm. Aber auch Aluminiumbleche mit Dicken bis zu 3 mm oder bis zu 4 mm werden in Umformprozessen umgeformt und im Automobilbereich, beispielsweise in Fahrwerksanwendungen oder als Strukturteil, eingesetzt.

Erfindungsgemäß besteht das Band oder das Blech zumindest teilweise aus einer Aluminiumlegierung vom Typ AA7xxx, Typ AA6xxx, vom Typ AA5xxx oder vom Typ AA3xxx, insbesondere aus einer Aluminiumlegierung vom Typ AA7020, AA7021, AA7108, AA6111, AA6060, AA6016, AA6014, AA6005C, AA6451, AA5454, AA5754, AA5251, AA5182, AA3103 oder AA3104. Daneben kann bevorzugt auch eine AlMg6-Legierung für das Band oder Blech verwendet werden. Schließlich ist auch die Verwendung von plattierten Verbundwerkstoffen mit den oben genannten Legierungen beispielsweise als Kernlegierung denkbar. Beispielsweise weist eine mit einer AA8079 Aluminiumlegierung plattierte Kernlegierung vom Typ AA6016 oder AA6060 bereits ohne die Oberflächenbehandlung durch elektro-chemisches Körnen sehr gute Umformeigenschaften auf. Es wird davon ausgegangen, dass diese Eigenschaften über die erfindungsgemäße Oberflächentextur zusätzlich verbessert werden können und darüber hinaus eine höhere Alterungsbeständigkeit der Klebeverbindung erreicht werden kann. Den genannten Aluminiumlegierungen ist gemein, dass diese üblicherweise für die Verwendung in Kraftfahrzeugen bevorzugt werden. Sie zeichnen sich durch ein hohes Umformvermögen und die Bereitstellung von mittelhohen bis sehr hohen Festigkeiten aus. Beispielsweise können durch eine Aushärtung nach der Umformung die Aluminiumlegierungen vom Typ AA6xxx oder AA7xxx sehr hohe Festigkeiten erreichen und werden in Strukturanwendungen eingesetzt. Sie werden daher in der Regel auch mit hochfesten Klebstoffen geklebt, so dass bei Klebstoffverbindungen dieser Legierungstypen eine sehr hohe Adhäsion zwischen Klebstoff und Metalloberfläche vorhanden sein sollte. Diese kann das erfindungsgemäße Band bereitstellen. Die genannten hochmagnesiumhaltigen Aluminiumlegierungen vom Typ AA5xxx und AlMg6 sind nicht aushärtbar, weisen aber neben einem sehr guten Umformverhalten auch ohne Aushärtung sehr hohe Festigkeitswerte auf, so dass diese wie die Legierungstypen AA6xxx und AA7xxx in Strukturanwendungen im Kraftfahrzeug eingesetzt werden. Die Legierungen vom Typ AA3xxx stellen mittelhohe Festigkeiten bereit und werden bevorzugt für Bauteile verwendet, bei welchen die Steifigkeit im Vordergrund steht und eine hohe Umformbarkeit gefordert wird. Zudem sind alle genannten Aluminiumlegierungen für Klebstoffverbindungen einsetzbar, wobei aufgrund der geringeren Magnesiumgehalte die Aluminiumlegierungen vom Typ AA6xxx im Vergleich zur Aluminiumlegierung vom Typ AA5xxx häufig höhere Festigkeiten für die Klebstoffverbindung bereitstellen. Die Verbesserung der Alterungsbeständigkeit aufgrund der erfindungsgemäßen Oberflächenstruktur zeigen aber sowohl Legierungen vom Typ AA5xxx als auch AA6xxx. Es wird erwartet, dass dies ebenfalls für die Legierungen vom Typ AA7xxx und AA3xxx ebenfalls gilt.

Bevorzugt ist das Band gemäß einer weiteren Ausgestaltung für die Herstellung von Blechen für Kraftfahrzeuge, insbesondere zur Herstellung von Blechen für Strukturanwendungen von Kraftfahrzeugen, ausgebildet. Bei Kraftfahrzeugen und insbesondere in den Strukturanwendungen des Kraftfahrzeugs werden hohe Anforderungen an die Adhäsion zwischen Klebstoff und Metalloberfläche gefordert, da die Klebstoffverbindungen mit hochfesten Klebstoffen in der Regel bereitgestellt werden.

Wie bereits ausgeführt, führt das elektro-chemische Körnungsverfahren zu einer ganz spezifischen Oberflächentopografie, d.h. zu spezifisch ausgeprägten Vertiefungen, welche unter anderem auch als Schmierstofftaschen dienen können. Zur Beschreibung der spezifisch ausgebildeten Oberflächentopographie stehen gemäß EN ISO 25178 zur flächenhaften Rauheitsmessung die reduzierte Spitzenhöhe $S_{pk}$, die Kernrautiefe $S_k$ und die reduzierte Muldentiefe (auch reduzierte Riefentiefe genannt) $S_{vk}$ zur Verfügung.

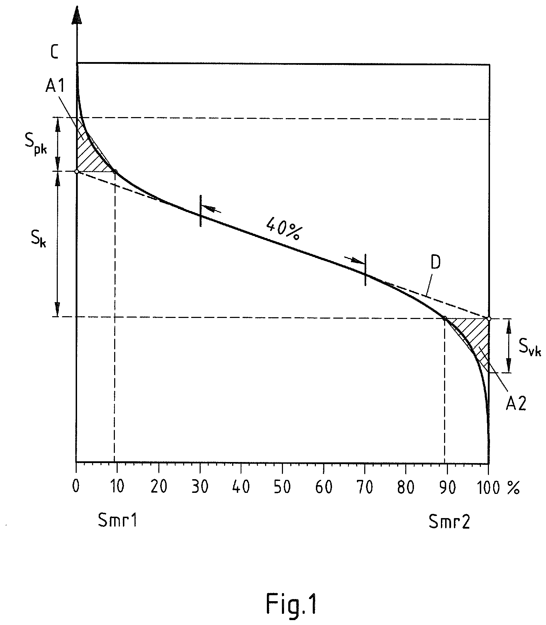

Alle drei genannten Parameter können gemäß EN ISO 25178 aus einer sogenannten Abbott-Kurve abgelesen werden. Um die Abbott-Kurve zu erhalten, wird eine Oberfläche üblicherweise optisch dreidimensional vermessen. In das gemessene dreidimensionale Höhenprofil der Oberfläche werden ebene Flächen, die sich parallel zur gemessenen Oberfläche erstrecken, in einer Höhe c eingebracht, wobei c vorzugsweise als Distanz zur Nulllage der vermessenen Oberfläche bestimmt wird. Der Flächeninhalt der Schnittfläche der eingebrachten ebenen Flächen mit der gemessenen Oberfläche in der Höhe c wird ermittelt und mit der gesamten Messfläche dividiert, um den Flächenanteil der Schnittfläche an der Gesamtmessfläche zu erhalten. Dieser Flächenanteil wird für verschiedene Höhen c bestimmt. Die Schnittflächenhöhe wird dann als Funktion des Flächenanteils dargestellt, woraus sich die Abbott-Kurve ergibt, Fig. 1.

Mit Hilfe der Abbott-Kurve können die reduzierte Spitzenhöhe ($S_{pk}$), Kernrautiefe ($S_k$) und die reduzierte Muldentiefe ($S_{vk}$) ermittelt werden. Alle drei Parameter verweisen auf unterschiedliche Oberflächeneigenschaften. Es wurde ermittelt, dass insbesondere die reduzierte Muldentiefe ($S_{vk}$) mit einem verbesserten Umformverhalten korreliert.

Die Abbott-Kurve weist üblicherweise für gewalzte Oberflächen einen S-förmigen Verlauf auf. In diesen S-förmigen Verlauf der Abbott-Kurve wird eine Sekante mit einer Länge von 40 % des Materialanteils, in der Abbott-Kurve so weit verschoben, bis diese einen minimalen Steigungsbetrag aufweist. Dies ist üblicherweise im Wendepunkt der Abbott-Kurve der Fall. Die Verlängerung dieser Gerade bis zu 0 % Material bzw. 100 % Materialanteil ergibt wiederum zwei Werte für die Höhe c bei 0 % bzw. 100 % Materialanteil. Der vertikale Abstand der beiden Punkte ergibt die Kernrautiefe $S_k$ des Profils. Die reduzierte Muldentiefe $S_{vk}$ ergibt sich aus einem mit den Talflächen der Abbott-Kurve flächengleichen Dreieck $A_2$ mit einer Basislänge von 100 % - Smr2, wobei sich Smr2 aus dem Schnittpunkt der Abbott-Kurve mit einer Parallelen zur X-Achse, welche durch den Schnittpunkt der Verlängerung der Sekante mit der 100%-Abszisse verläuft, ergibt. Die Höhe dieses flächengleichen Dreiecks entspricht bei einer Flächenmessung der reduzierten Muldentiefe $S_{vk}$, Fig. 1.

Die reduzierte Spitzenhöhe $S_{pk}$ ist die Höhe des mit den Kuppenflächen der Abbott-Kurve flächengleichen Dreiecks mit der Basislänge Smr1. Smr1 ergibt sich aus dem Schnittpunkt der Abbott-Kurve mit einer Parallelen zur X-Achse, welche durch den Schnittpunkt der Verlängerung der oben genannten Sekante mit der 0%-Achse verläuft.

Die Parameter $S_k$, $S_{pk}$ und $S_{vk}$ bei einer Flächenmessung ermöglichen eine getrennte Betrachtung des Profils in Bezug auf den Kernbereich, Spitzenbereich und Riefenbereich bzw. Muldenbereich.

Als weiterer Parameter der Oberfläche kann auch die Muldendichte der Textur $n_{clm}$ verwendet werden. Die Muldendichte gibt die maximale Anzahl der geschlossenen Leervolumina, d.h. der Vertiefungen bzw. Mulden in Abhängigkeit von der Messhöhe c pro $mm^2$ an. Die Messhöhe c entspricht dabei dem Wert c, welcher auch in der Abbott-Kurve dargestellt ist. Die Messhöhe c entspricht somit bei 100% der höchsten Erhebung der Oberfläche und bei 0 % der tiefsten Stelle des Oberflächenprofils.

Es gilt:

$n_{cl}$ (c) = Anzahl der geschlossenen Leerflächen pro Flächeneinheit (1/mm$^2$) bei gegebener Messhöhe c (%) und

$n_{clm}$ = MAX($n_{cl}$ ($c_i$)) , wobei $n_{clm}$ die maximale Anzahl der geschlossenen Leerflächen pro Flächeneinheit (1/mm$^2$) mit $c_i$ = 0 bis 100% entspricht.

Schließlich dient auch das geschlossene Leervolumen $V_{vcl}$ der Oberfläche zur Charakterisierung der Oberfläche. Es bestimmt die Aufnahmefähigkeit der Oberfläche beispielsweise für Schmierstoffe. Das geschlossene Leervolumen wird durch Bestimmung der geschlossenen Leerfläche $A_{vcl}$(c) in Abhängigkeit der Messhöhe c bestimmt. Das geschlossene Leervolumen $V_{vcl}$ ergibt sich dann aus:

$$V_{vcl} = \int\limits_{0}^{100\%} A_{vcl}(c)dc$$

Auch mit Hilfe der Schiefe der Topographie der Oberfläche $S_{sk}$ kann die Oberfläche beschrieben werden. Diese gibt an, ob die vermessene Oberfläche einen plateauartigen Aufbau mit Vertiefungen aufweist oder eine durch Erhebungen oder Spitzen geprägte Oberfläche vorliegt. Die $S_{sk}$ ist gemäß DIN EN ISO 25178-2 der Quotient der mittleren dritten Potenz der Ordinatenwerte und der dritten Potenz der mittleren quadratischen Höhe $S_q$. Es gilt:

$$S_{sk} = \frac{1}{S_q^3}\left(\frac{1}{A}\iint\limits_A z^3(x,y)dxdy\right),$$

wobei A der begrenzte Oberflächenteil der Messung ist und z die Höhe des Messpunktes. Für $S_q$ gilt:

$$S_q = \sqrt{\frac{1}{A}\iint\limits_A z^2(x,y)dxdy} .$$

Ist $S_{sk}$ kleiner Null so liegt eine plateauartige, durch Vertiefungen geprägte Oberfläche vor. Bei einem Wert für $S_{sk}$ größer Null wird die Oberfläche durch Spitzen geprägt und weist keinen oder nur einen sehr geringen plateauartigen Oberflächenanteil auf.

Gemäß der Erfindung ist die zumindest bereichsweise vorgesehene Oberflächenstruktur mindestens auf einer oder auf beiden Seiten des Bandes vorgesehen und weist eine reduzierte Muldentiefe $S_{vk}$ von 1,0 μm - 6,0 μm, vorzugsweise 1,5 μm - 4,0 μm, besonders bevorzugt 2,2 μm bis 4,0 μm auf. Mit einer reduzierten Muldentiefe von 1,0μm - 6,0 μm kann eine um mindestens den Faktor 4 größere reduzierte Muldentiefe $S_{vk}$ als bei konventionell walzgeprägten Oberflächenstrukturen am erfindungsgemäßen Band aus einer Aluminiumlegierung bereitgestellt werden. Die bevorzugt ausgewählten Werte für die reduzierte Muldentiefe ermöglichen ein verbessertes Umformverhalten, ohne die späteren Oberflächeneigenschaften, beispielsweise die Oberflächenanmutung nach einer Lackierung, zu beeinflussen. Gleichzeitig zeigten Klebstoffverbindungen an entsprechenden Oberflächenstrukturen aufweisenden Bereichen der Bänder verbesserte Festigkeiten im Ausgangszustand als auch nach einer Bewitterung, d.h. nach einer künstlichen Alterung, auf. Die Bewitterung wurde durch einen Salzsprühtest gemäß DIN EN ISO 9227 für 500 Stunden durchgeführt und die Festigkeit der Klebstoffverbindung im später näher erläuterten Zugscherversuch ermittelt.

Bevorzugt beträgt gemäß einer weiteren Ausgestaltung des erfindungsgemäßen Bandes das geschlossene Leervolumen $V_{vcl}$ mindestens 450 mm$^3$/m$^2$, bevorzugt mindestens 500 mm$^3$/m$^2$. Als eine praktische Obergrenze kann 1000 mm$^3$/m$^2$ bzw. 800 mm$^3$/m$^2$ angesehen werden. Allerdings sind auch Werte oberhalb von 1000 mm$^3$/m$^2$ denkbar. Die Vergrößerung des geschlossenen Leervolumens stellt auch bei Klebstoffverbindungen eine größere Oberfläche pro Flächeninhalt des Bandes zur Verfügung, so dass höhere Haftkräfte zwischen Klebstoff und Band bzw. eines daraus hergestellten Blechs im Vergleich zur nicht gekörnten Oberfläche erzielt werden. Zudem kann die erfindungsgemäße Bandoberfläche deutlich mehr Schmierstoff für den Umformprozess zur Verfügung stellen als die bisher verwendeten konventionellen Oberflächen.

Das erfindungsgemäße Aluminiumlegierungsband weist gemäß einer weiteren Ausgestaltung eine um mindestens 25 % gesteigerte Muldendichte $n_{clm}$ der Oberfläche gegenüber konventionell hergestellten Oberflächentexturen, beispielsweise EDT-Texturen auf. Die Muldendichte der Oberfläche beträgt bevorzugt mehr als 80 bis 180 Mulden pro $mm^2$, bevorzugt 100 bis 150 Mulden pro $mm^2$.

Eine weitere Ausgestaltung des Aluminiumlegierungsbandes weist eine Schiefe der Topographie der Oberfläche $S_{sk}$ von 0 bis -8, bevorzugt -1 bis -8 auf. Hierdurch wird erreicht, dass die Oberfläche eine plateauartige Struktur aufweist, welche mit Vertiefungen versehen ist, so dass Schmierstofftaschen bereitgestellt werden. Diese Oberflächentopographie, insbesondere mit einer Schiefe von -1 bis -8 wird beispielsweise durch elektro-chemisches Körnen einer "mill-finish" Walzoberfläche erreicht und weist ein bevorzugtes Umformverhalten auf.

Gemäß einer weiteren Ausgestaltung des erfindungsgemäßen Bandes bzw. Bleches weist dieses den Zustand weichgeglüht ("0") oder lösungsgeglüht und abgeschreckt ("T4") auf. Beide Zustände weisen ein maximales Umformvermögen auf und ermöglichen gemeinsam mit der neuartigen Oberflächenstruktur des Bandes oder Blechs eine Erhöhung des Umformvermögens. Während der Zustand "O" durch jeden Werkstoff bereitgestellt wird, werden aushärtbare Werkstoffe, beispielsweise AA6xxx- oder AA7xxx-Legierungen, lösungsgeglüht und anschließend abgeschreckt. Dieser Zustand wird als T4 bezeichnet. Allgemein sind beide Zustände jedoch bevorzugt für Umformprozesse vorgesehen, da in diesem Zustand das Blech bzw. das Band maximale Umformgrade, abhängig vom jeweiligen Werkstoff, zulässt. Im Zustand T4 wird zusätzlich eine Steigerung der Festigkeit durch ein Aushärten ermöglicht. T4 ist ein bevorzugter Zustand für das Band aus einer Aluminiumlegierung zur Bereitstellung von Klebstoffverbindungen, denn die Klebstoffverbindungen werden in der Regel nach der Umformung beim Zusammenbau der Bleche, beispielsweise zu einem Längsträger oder einer B-Säule eines Kraftfahrzeugs, benötigt und realisiert. Die thermische Aushärtung des Klebstoffs, die bevorzugt gleichzeitig mit dem Einbrennen einer Lackierung erfolgen kann, überführt die aushärtbaren Al-Legierungen in den Zustand T6, der wegen seiner höheren Festigkeit, der bevorzugte Zustand des Aluminiums während des Einsatzes im Fahrzeug ist.

Gemäß einer weiteren Ausgestaltung weist das Band optional eine nach dem elektro-chemischen Körnen aufgebrachte Passivierungsschicht auf. Diese Passivierungsschicht besteht üblicherweise aus chrom-freien Konversionsmaterialien, welche die Oberfläche des Aluminiumbandes vor Korrosion schützen und einen optimalen Haftgrund für nachfolgende Prozesse bereiten. Eine spezifische Passivierungsschicht stellt daher die Konversionsschicht dar. Zwar ist die Passivierungsschicht aufgrund des Verfahrens zur Erzeugung der erfindungsgemäßen Oberflächenstruktur optional, dennoch verbessert die Konversionsschicht zusätzlich die Alterungsbeständigkeit der Oberfläche des erfindungsgemäßen Aluminiumlegierungsbandes. Die nach dem elektro-chemischen Körnen aufgebrachte Passivierung beeinflusst zudem die Bereitstellung von Schmierstofftaschen für den Umformprozess des Bandes oder Blechs nicht, so dass auch passivierte Bänder gut umgeformt werden können.

Gemäß einer weiteren Ausgestaltung weist das Band auf der Oberfläche zumindest bereichsweise eine Umformhilfe, insbesondere einen Trockenschmierstoff auf, welche als Schutzschicht während Transport, Lagerung und Handling und als Schmierstoff in nachfolgenden Umformprozessen dienen kann. Hierdurch wird ermöglicht, ein besonders lagerfähiges Produkt zur Verfügung zu stellen, das gleichzeitig auch aufgrund der Schutzschicht einfach handhabbar ist.

Gemäß einer weiteren Ausgestaltung des Aluminiumlegierungsbandes beträgt die mittlere Rauheit $S_a$ der Oberfläche des Bands 0,5 $\mu m$ bis 2,0 $\mu m$, bevorzugt 0,7 $\mu m$ bis 1,5 $\mu m$, besonders bevorzugt 0,7 $\mu m$ bis 1,3 $\mu m$ oder vorzugsweise 0,8 $\mu m$ bis 1,2 $\mu m$. Bänder für innenliegende Teile eines Kraftfahrzeugs oder Strukturanwendungen weisen bevorzugt eine mittlere Rauheit Sa von 0,7 $\mu m$ bis 1,3 $\mu m$ und Außenhautteile eines Kraftfahrzeugs eine mittlere Rauheit Sa von 0,8 $\mu m$ bis 1,2 $\mu m$ auf. Außen- und Innenteile eines Kraftfahrzeugs erhalten dann eine sehr gute Oberflächenanmutung und sind für eine Lackierung besonders gut geeignet.

Die oben hergeleitete Aufgabe löst auch ein Blech, welches aus einem erfindungsgemäßen Aluminiumlegierungsband durch Zuschneiden des Bandes hergestellt wird. Diese Bleche werden bevorzugt Umformverfahren unterzogen und anschließend als umgeformtes Blech mit anderen Bauteilen, beispielsweise Bauteilen eines Kraftfahrzeugs, über eine Klebstoffverbindung verbunden. Beim Kleben werden beispielsweise Epoxid-Klebstoffe, Epoxid/Polyimid-Blends, Polyurethan-Klebstoffe, Acrylat-Klebstoffe, Phenolharze oder auch silanmodifizierte Polymere abhängig von der jeweiligen Anwendung und den gewünschten Eigenschaften der Klebstoffverbindung verwendet.

Gemäß einer zweiten Lehre der vorliegenden Erfindung wird die oben aufgezeigte Aufgabe für ein Verfahren zur Herstellung eines Aluminiumlegierungsbands dadurch gelöst, dass ein warm- und/oder kaltgewalztes Band oder Blech bestehend aus einer Aluminiumlegierung nach dem Walzen einem ein- oder beidseitigen elektro-chemischen Körnen unterzogen wird, wobei durch das elektro-chemische Körnen homogen verteilte Vertiefungen in das Band oder Blech aus einer Aluminiumlegierung eingebracht werden.

Die so hergestellten Aluminiumlegierungsbänder oder -bleche weisen spezifische Oberflächen auf. Die eingewalzte Textur des Bandes oder Blechs bleibt bis auf die zusätzlich eingebrachten Vertiefungen, welche durch das elektro-chemische Körnen eingebracht wurden, erhalten. Die Walztextur bildet beispielsweise bei einer "Mill-Finish"-Oberfläche eine plateauartige Oberfläche, in welche homogen verteilte Vertiefungen vorhanden sind. Damit unterscheidet sich das erfindungsgemäß hergestellte Aluminiumlegierungsband oder -blech deutlich von konventionell hergestellten Aluminiumlegierungsbändern und -blechen, deren Textur aufgrund des Texturwalzprägens nicht plateauartig ausgebildet ist.

Vorzugsweise wird das Band oder Blech einem Umformvorgang, beispielsweise einem Tiefziehen, unterzogen. Das Tiefziehen umfasst in der Praxis üblicherweise Tiefzieh- und Streckziehanteile. Hierzu kann das Aluminiumlegierungsband oder -blech zuvor mit einer Umformhilfe, beispielsweise mit einem Schmierstoff oder Trockenschmierstoff belegt werden, so dass durch den in den Vertiefungen der Oberfläche, welche dann als Schmierstofftaschen dienen, vorhandenen Schmierstoff ein besseres Umformverhalten aufgrund der optimierten Oberflächenstruktur und der besseren Schmierstoffbelegung erzielt wird. Die Schmierstoffbelegung steht dabei der Bereitstellung von Klebstoffverbindungen nicht entgegen, da üblicherweise die verwendeten Klebstoffe auf das Vorhandensein von den Schmierstoffen angepasst sind und die gewünschte Klebewirkung entfalten.

Bevorzugt weist das warm- und/oder kaltgewalzte Band oder Blech ferner eine Mindestdicke von 0,8 mm auf. Aluminiumlegierungsbänder oder -bleche mit einer Dicke von mindestens 0,8 mm werden häufig einem Umformprozess, beispielsweise einem Tiefziehen, unterzogen, um beispielsweise ein ebenes Blech in eine spezifische für die Anwendung benötigte Form zu bringen. Bevorzugte Dicken im Kraftfahrzeugbau sind 1,0 bis 1,5 mm beispielsweise für Anbauteile wie Türen, Hauben und Klappen, aber auch 2 mm bis 3mm oder bis 4 mm beispielsweise für Strukturbauteile, wie Teile der Rahmenkonstruktion oder des Fahrwerks. Türen, Hauben und Klappen aber auch die zuvor genannten Strukturbauteile eines Kraftfahrzeugs weisen besonders häufig Klebstoffverbindungen zu anderen Bauteilen auf, wobei die jeweiligen Verbindungspartner auch aus anderen Aluminiumlegierungen oder anderen Metallen und Nichtmetallen bestehen können. Schließlich werden häufig hohe Umformanforderungen an Anbauteile mit Blechdicken von 1,0 mm bis 1,5 mm gestellt. Anbauteile sind oft sichtbare Bestandteile eines Kraftfahrzeugs, so dass hier die Möglichkeit einer individuellen Formgebung der Bleche eine sehr große Rolle spielt.

Wie bereits zuvor ausgeführt, wird im Gegensatz zu dem bekannten Stand der Technik die Oberflächenstruktur des Aluminiumbandes durch ein elektro-chemisches Körnungsverfahren mit einem Elektrolyten durchgeführt. Über den Ladungseintrag und die Stromdichte kann die Oberflächenstruktur und der Anteil der aufgerauten Oberfläche ohne zusätzlichen Walzschritt eingestellt werden. Das Verfahren ist nicht nur einfach handhabbar, sondern lässt sich gut auf große Durchsatzmengen skalieren. Gleichzeitig wird erreicht, dass der zusätzliche Schritt zur Aufbringung der Passivierung als haftungsvermittelnde Schicht entfallen kann.

Erfindungsgemäß werden in die Band- oder Blechoberfläche Vertiefungen mit einer reduzierten Muldentiefe $S_{vk}$ von 1,0 $\mu$m bis 6,0 $\mu$m, vorzugsweise 1,5 $\mu$m bis 4,0 $\mu$m, besonders bevorzugt 2,2 $\mu$m bis 4,0 $\mu$m durch das elektrochemische Körnen eingebracht. Es hat sich gezeigt, dass Bänder mit entsprechender Oberflächentopografie verbesserte Eigenschaften zur Bereitstellung alterungsbeständiger Klebstoffverbindungen erreichen. Die tribologischen Eigenschaften des Aluminiumblechs bzw. -bands können mit dieser Oberflächenstruktur ebenfalls verbessert werden. Mit den beschränkten Muldentiefen $S_{vk}$ von 1,5 $\mu$m bis 4,0 $\mu$m bzw. 2,2 $\mu$m bis 4,0 $\mu$m kann ein verbessertes Umformverhalten erreicht werden, ohne die späteren Oberflächeneigenschaften, beispielsweise die Oberflächenanmutung nach einer Lackierung, zu beeinflussen. Bevorzugt wird das Band oder Blech gemäß einer weiteren Ausgestaltung vor dem elektrochemischen Körnen einem Reinigungsschritt unterzogen, bei welchem durch alkalisches oder saures Beizen und optional unter Verwendung von weiteren Entfettungsmedien die Oberfläche gereinigt und ein homogener Materialabtrag vorgenommen wird. Der Materialabtrag soll im Wesentlichen durch das Walzen eingebrachte Verunreinigungen der Oberfläche beseitigen, so dass für das elektro-chemische Körnen eine sehr gut geeignete Oberfläche zur Verfügung steht.

Vorzugsweise wird das elektro-chemische Körnen mit $HNO_3$ in einer Konzentration von 2 - 20 g/l, vorzugsweise 2,5 bis 15 g/l und mit einem Ladungsträgereintrag von mindestens 200 C/dm$^2$, vorzugsweise mindestens 500 C/dm$^2$ durchgeführt. Die Stromdichten können von mindestens 1 A/dm$^2$, bevorzugt bis 60 A/dm$^2$ oder 100 A/dm$^2$ variieren. Es handelt es sich hier um die Angabe der Peak-Wechselstromdichten bzw. der Peak-Stromdichten von gepulstem Gleichstrom. Mit den genannten Parametern ist es möglich unter Einhaltung wirtschaftlicher Prozesszeiten und Elektrolyttemperaturen von weniger als 75 °C, bevorzugt im Bereich zwischen Raumtemperatur und 50 °C bzw. 40 °C, eine ausreichende Oberflächenabdeckung der gekörnten Bereiche zu erzielen. Als Alternative zu Salpetersäure kann auch Salzsäure als Elektrolyt verwendet werden.

Das erfindungsgemäße Verfahren kann dadurch weiter ausgestaltet werden, dass nach dem elektro-chemischen Körnen zumindest bereichsweise eine Passivierung der Bandoberfläche, vorzugsweise durch Auftragen einer Konversionsschicht durchgeführt wird und/oder zumindest bereichsweise eine Umformhilfe aufgetragen wird. Das Aufbringen einer Konversionsschicht kann, wie bereits ausgeführt, die Alterungsbeständigkeit der Klebstoffverbindungen weiter verbessern, da die Korrosionsbeständigkeit der Oberfläche und/oder die Haftung zum Klebstoff gesteigert werden. Unter einer Umformhilfe werden beispielsweise Schmierstoffe und Trockenschmierstoffe, die optional schmelzfähig sein können, verstanden. Die Konversionsschicht und die Umformhilfe können als Schutzschicht ausgebildet sein und das Aluminiumlegierungsband oder -blech einzeln oder gleichzeitig in Bezug auf die Korrosionsbeständigkeit und damit die Lagerfähigkeit des Bandes oder Blechs verbessern. Die Umformhilfe verbessert zusätzlich die Umformeigenschaften. Daneben kann alternativ zur Konversionsschicht auch zumindest bereichsweise ein Schutzöl zum Schutz vor Korrosion der Aluminiumlegierungsbandoberfläche bzw. der Blechoberfläche aufgebracht werden. Vorzugsweise wird das Aufbringen der Konversionsschicht mit dem Aufbringen einer bevorzugt schmelzfähigen Umformhilfe, insbesondere eines schmelzfähigen Trockenschmierstoffs, beispielsweise eines sogenannten "Hotmelts" kombiniert. Wie bereits zuvor ausgeführt, sind die verwendeten Formulierungen für die Klebstoffe auf das Vorhandensein von Schutzölen oder Umformhilfen angepasst und erlauben trotz oder in einigen Fällen auch gerade wegen der Anwesenheit dieser Stoffe eine gute Klebstoffverbindung.

Werden die genannten Prozessschritte zumindest teilweise in einer gemeinsamen Fertigungslinie durchgeführt, kann eine besonders wirtschaftliche Herstellung einer entsprechenden Bandoberfläche bzw. eines entsprechenden Aluminiumlegierungsbandes oder -blechs zur Verfügung gestellt werden. Entsprechend hergestellte Bänder und Bleche sind gleichzeitig lagerfähig und können auf einfache Weise gehandhabt und weiterverarbeitet werden, da diese vor Korrosion und mechanischen Beschädigungen geschützt sind.

Vorzugsweise wird das Band oder Blech nach einem Weichglühen oder nach einem Lösungsglühen und Abschrecken elektro-chemisch gekörnt. Dies hat den Vorteil, dass die Wärmebehandlung die Oberflächeneigenschaften des Blechs nach dem elektro-chemischen Körnen nicht negativ beeinflussen kann und ein in Bezug auf die Anforderungen zur Klebstoffhaftung optimiertes Band bzw. Blech bereitgestellt werden kann. Optional kann die Oberflächentexturierung durch elektro-chemisches Körnen aber auch vor der Schlussglühung, also dem Weichglühen oder dem Lösungsglühen und Abschrecken durchgeführt werden.

Gemäß einer weiteren Ausgestaltung des erfindungsgemäßen Verfahrens werden vorzugsweise die Verfahrensschritte in einer Fertigungslinie durchgeführt:

- Abwickeln des Bandes von einer Haspel,
- Reinigen und Beizen des Bandes,
- zumindest bereichsweises elektro-chemisches Körnen des Bandes,
- zumindest bereichsweises Auftragen einer Konversionsschicht und/oder einer Umformhilfe oder alternativ eines Schutzöls.

Durch diese Fertigungsschritte können lagerfähige Aluminiumlegierungsbänder bzw. -bleche auf wirtschaftliche Weise zur Verfügung gestellt werden, die für die Bereitstellung von Klebstoffverbindungen optimiert sind. Die auf die Bereitstellung von Klebstoffverbindungen vorbereitete Oberfläche der Aluminiumlegierungsbänder bzw. -bleche bleibt während des Lagerns in ihren Eigenschaften im Wesentlichen unverändert. Als Umformhilfen werden Schmierstoffe, insbesondere Trockenschmierstoffe, zum Beispiel Hotmelts, verwendet. Diese bilden bei Raumtemperatur (20 - 22 °C) einen nichtablaufenden, pastösen, fast grifffesten Dünnfilm auf der Band- bzw. Blechoberfläche auf der Basis von Mineralöl, Syntheseöl und/oder nachwachsenden Rohstoffen. Im Vergleich zu Schutzölen weisen Hotmelts verbesserte Schmiereigenschaften, insbesondere beim Tiefziehen auf. Grundsätzlich ist es auch möglich, nach dem elektro-chemischen Körnen nur ein Schutzöl aufzutragen und eine Umformhilfe erst vor dem Umformvorgang aufzutragen.

Schließlich wird gemäß einer dritten Lehre die aufgezeigte Aufgabe durch eine Klebstoffverbindung, insbesondere eine Klebstoffverbindung eines Kraftfahrzeugs zwischen mindestens zwei Fügepartnern dadurch gelöst, dass mindestens ein Fügepartner ein erfindungsgemäßes Blech aus einer Aluminiumlegierung ist und die Klebstoffverbindung in mindestens einem Bereich des Blechs vorgesehen ist, welcher eine durch ein elektro-chemisches Körnen hergestellte Vertiefungen aufweisende Oberflächenstruktur aufweist. Wie zuvor erläutert wird durch die entsprechende Oberflächenbehandlung des mindestens einen Fügepartners der Klebstoffverbindung die Alterungsbeständigkeit der Klebstoffverbindung zu dem erfindungsgemäßen Blech deutlich verbessert. Abhängig von der Anwendung können für die Klebstoffverbindung beispielsweise Epoxid-Klebstoffe, Epoxid/Polyimid-Blends, Polyurethan-Klebstoffe, Acrylat-Klebstoffe, Phenolharze, silanmodifizierte Polymere oder auch Schmelzklebstoffe, sogenannte Hotmelts verwendet werden. Die zuletzt genannten Hotmelts unterscheiden sich allerdings von den Trockenschmierstoffen durch ihre Klebewirkung.

Im Weiteren soll die Erfindung anhand von Ausführungsbeispielen in Verbindung mit der Zeichnung näher erläutert werden. In der Zeichnung zeigt

Fig. 1         schematisch die Bestimmung der Parameter $S_k$, $S_{pk}$ und $S_{vk}$ anhand einer Abbott-Kurve,

Fig. 2         eine mikroskopische Aufnahme eines nicht erfindungsgemäßen Ausführungsbeispiels,

Fig. 3         eine mikroskopisch vergrößerte Aufnahme eines Ausführungsbeispiels einer erfindungsgemäßen Bandoberfläche,

Fig. 4         in einer schematischen Darstellung ein Ausführungsbeispiel einer Fertigungslinie zur Durchführung des erfindungsgemäßen Verfahrens,

Fig. 5         eine schematische Schnittansicht eines Ausführungsbeispiel eines erfindungsgemäßen Bandes oder Blechs,

Fig. 6 a), b)    schematisch in einer Draufsicht und einer perspektivischen Ansicht die Versuchsanordnung zur Durchführung Zugscherversuche von Klebstoffverbindungen,

Fig. 7 a) bis e)    verschiedene Bruchbilder beim Zugscherversuch in einer schematischen Schnittdarstellung,

Fig. 8    in einem Diagramm Ergebnisse von Zugscherversuchen für acht verschiedene Ausführungsbeispiele vor und nach einer Bewitterung und

Fig. 9a) bis c)    drei schematische Schnittansichten von Ausführungsbeispielen einer erfindungsgemäßen Klebstoffverbindung.

In Fig. 1 ist zunächst dargestellt, wie aus einer Abbott-Kurve die Parameterwerte für die Kernrautiefe $S_k$, die reduzierte Muldentiefe $S_{vk}$ sowie die reduzierte Spitzenhöhe $S_{pk}$ ermittelt werden können. Die Bestimmung erfolgt gemäß DIN-EN-ISO 25178 für eine normgerechte Messfläche. Üblicherweise werden optische Messverfahren, beispielsweise konfokale Mikroskopie angewendet, um ein Höhenprofil einer Messfläche zu ermitteln. Aus dem Höhenprofil der Messfläche kann der Flächenanteil des Profils ermittelt werden, der eine Fläche parallel zur Messfläche in der Höhe c schneidet bzw. oberhalb der Fläche verläuft. Stellt man die Höhe c der Schnittfläche in Abhängigkeit vom Flächenanteil der Schnittfläche zur Gesamtfläche dar, ergibt sich die Abbott-Kurve, welche den typischen S-förmigen Verlauf für gewalzte Oberflächen zeigt.

In die ermittelte Abbott-Kurve wird zur Bestimmung der Kernrautiefe $S_k$, der reduzierten Muldentiefe $S_{vk}$ bzw. der reduzierten Spitzenhöhe $S_{pk}$ eine Sekante D mit 40 % Länge so auf der Abbott-Kurve verschoben, dass der Betrag der Steigung der Sekante D minimal ist. Aus der Differenz der Abszissenwerte der Schnittpunkte der Sekante D mit der Abszisse bei 0% Flächenanteil sowie bei 100% Flächenanteil ergibt sich die Kernrautiefe $S_k$ der Oberfläche. Die reduzierte Spitzenhöhe $S_{pk}$ und die reduzierte Muldentiefe $S_{vk}$ entspricht der Höhe eines Dreiecks, das flächengleich mit der Spitzenfläche A1 bzw. der Riefenfläche A2 der Abbott-Kurve ist. Das Dreieck der Spitzenfläche A1 hat als Grundfläche den Wert Smr1, welcher sich aus dem Schnittpunkt einer Parallelen zur X-Achse mit der Abbott-Kurve ergibt, wobei die Parallele zur X-Achse durch den Schnittpunkt der Sekante D mit der Abszisse bei 0%-Flächenanteil verläuft. Das Dreieck der Riefenfläche oder Muldenfläche A2 hat als Grundfläche den Wert 100%-Smr2, wobei Smr2 sich aus dem Schnittpunkt einer Parallelen zur X-Achse mit der Abbott-Kurve ergibt und die Parallele zur X-Achse durch den Schnittpunkt der Sekante D mit der Abszisse bei 100%-Flächenanteil verläuft.

Mit diesen Kennwerten kann das Messprofil charakterisiert werden. Es kann ermittelt werden, ob es sich um ein plateauartiges Höhenprofil mit Vertiefungen handelt oder beispielsweise die Spitzen in dem Höhenprofil der Messfläche überwiegen. Bei Ersterem steigt der Wert für $S_{vk}$ an, bei Letzterem der Wert für $S_{pk}$.

Aus der optischen Vermessung der Oberflächen kann als weiterer Parameter der Oberfläche auch die Muldendichte der Textur $n_{clm}$ über die maximale Anzahl der geschlossenen Leervolumina $n_{clm}$, d.h. der Vertiefungen bzw. Mulden in Abhängigkeit von der Messhöhe c in Prozent pro mm$^2$ ermittelt werden. Dies ergibt die Anzahl der geschlossenen Leerflächen pro Flächeneinheit (1/mm$^2$) bei gegebener Messhöhe c (%). Aus $n_{cl}(c)$ wird das Maximum $n_{clm}$ bestimmt. Je größer $n_{clm}$ desto feiner die Oberflächenstruktur.

Ferner kann durch die optische Vermessung auch das geschlossene Leervolumen Vvcl durch Integration der geschlossenen Leerflächen $A_{vcl}$ (c) über die Messhöhe c ermittelt werden. Das geschlossene Leervolumen ist ebenfalls ein charakteristisches Oberflächenmerkmal der erfindungsgemäßen Bänder und Bleche.

Die Messung der Rauigkeit der Oberfläche erfolgt wie bereits ausgeführt optisch, da so im Vergleich zu einer taktilen Messung wesentlich schneller abgetastet werden kann. Die optische Erfassung erfolgt beispielsweise über Interferometrie oder konfokale Mikroskopie, wie es bei den vorliegenden Messdaten erfolgt ist. Gemäß EN ISO 25178-2 sind auch die Messflächen in ihrer Größe festgelegt. Die Messdaten wurden über quadratische Messflächen mit einer Seitenlänge von jeweils 2 mm ermittelt.

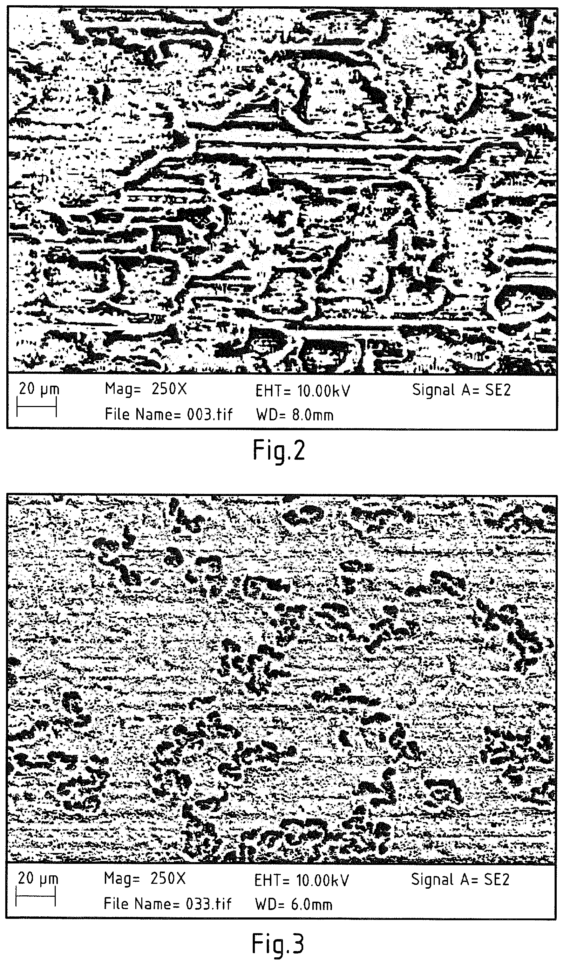

Um die Unterschiede zwischen den konventionellen, beispielsweise mit EDTstrukturierten Walzen aufgerauten Bändern und den erfindungsgemäß strukturierten Bändern zu zeigen, ist in Fig. 2 zunächst eine 250-fach vergrößerte Ansicht einer konventionellen Bandoberfläche dargestellt. Fig. 3 zeigt dagegen ein Ausführungsbeispiel einer erfindungsgemäßen Bandoberfläche, die mit einem elektro-chemischen Körnungsverfahren hergestellt wurde, ebenfalls in 250-facher Vergrößerung. Deutlich zu erkennen ist, dass einerseits die Strukturen beim elektro-chemischen Körnen feiner sind und aus Vertiefungen in einer plateau-artigen Oberfläche bestehen. Anders als in dem in Fig. 2 dargestellten konventionellen Walzprägen werden bei dem erfindungsgemäßen elektro-chemischen Körnen keine Spitzen in das Material eingebracht, sondern die gewalzte Oberfläche, hier eine "Mill-Finish" Oberfläche, nur durch Einbringen von Vertiefungen verändert bzw. moduliert. Es wird derzeit davon ausgegangen, dass die Vertiefungen, welche beim elektrochemischen Körnen entstehen, aufgrund der größeren geschlossenen Leervolumina mehr Schmierstoffe für den Umformprozess bereitstellen können und daher verbesserte Umformeigenschaften erzielt werden. Es wurde zudem erkannt, dass die höhere Muldentiefe $S_{vk}$ offensichtlich auch bei großer Oberflächenbeanspruchung während der Umformung Schmierstoffe bereitstellen kann und damit das Umformverhalten verbessert.

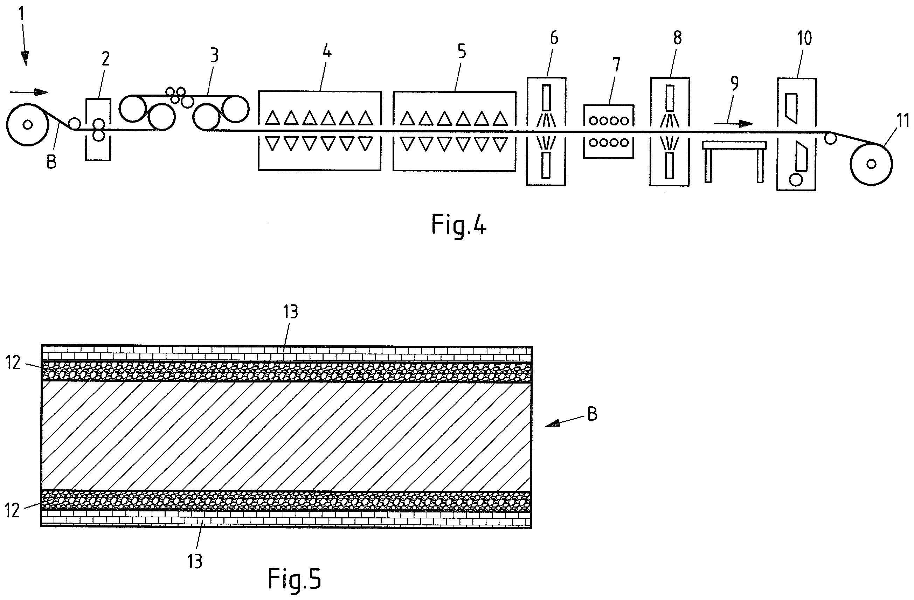

In Fig. 4 ist nun ein erstes Ausführungsbeispiel eines Verfahrens anhand eines Schaubildes einer Fertigungslinie zur Herstellung eines erfindungsgemäßen Bandes B dargestellt. In dem dargestellten Ausführungsbeispiel wird über eine Haspel 1 das Band B, welches zumindest teilweise aus einer Aluminiumlegierung vom Typ AA7xxx, Typ, AA6xxx oder, Typ AA5xxx oder Typ AA3xxx, insbesondere AA7020, AA7021, AA7108, AA6111, AA6060, AA6014, AA6016, AA6106, AA6005C, AA6451, AA5454, AA5754, AA5182, AA5251, AA3104, AA3103 oder AlMg6 besteht, abgewickelt. Die Dicke des Bandes beträgt vorzugsweise mindestens 0,8 mm, maximal jedoch 4 mm und bevorzugt zwischen 1,0 mm und 1,5 mm, beispielsweise bei Verwendung im Automobilbereich. Grundsätzlich kann die Dicke, beispielsweise bei Bändern für die Getränkedosenherstellung auch 0,1 mm bis 0,5 mm betragen. Auch bei diesen dünnen Bändern macht sich das verbesserte Umformverhalten bei der maximale Umformgrade erfordernde Getränkedosenherstellung bemerkbar.

Das mit der Haspel 1 abgewickelte Band hat gemäß dem vorliegenden Ausführungsbeispiel vorzugsweise den Zustand weichgeglüht "O", sofern es sich um eine Aluminiumlegierung vom Typ AA5xxx handelt oder vorzugsweise den Zustand lösungsgeglüht und abgeschreckt "T4" im Falle einer Aluminiumlegierung vom Typ AA6xxx. Damit liegt das Band schon in einem besonders gut umformbaren Zustand vor. Es ist aber auch denkbar, die Wärmebehandlung nach der Oberflächenbearbeitung bzw. dem Einbringen der Vertiefungen durchzuführen und dabei die Oberfläche walzharter Bänder zu bearbeiten.

Gemäß dem Ausführungsbeispiel wird das abgewickelte Aluminiumlegierungsband B einem optionalen Trimmvorgang zum Beschneiden der Seitenränder 2 zugeführt. Anschließend durchläuft das Band, ebenso optional, eine Richtvorrichtung, um Verformungen aus dem Band herauszunehmen. In der Vorrichtung 4 wird das Band einer optionalen Reinigung und einem optionalen Beizschritt oder einer elektrolytischen Entfettung unterzogen. Als Beize kommen hier Mineralsäuren in Betracht aber auch Basen, beispielweise auf Basis von Natronlauge. Hierdurch kann das Ansprechen des Bandes auf die elektro-chemische Körnung verbessert werden. Auch der Schritt 4 des Beizens ist optional. Nach einem optionalen Spülen wird das Aluminiumband in Schritt 5 einem elektro-chemischen Körnungsverfahren unterzogen, bei welchem in die Oberfläche Vertiefungen eingebracht werden. Beim elektro-chemischen Körnen fließt Strom mit einer gewissen Stromdichte durch die Bandoberfläche, der bei Wahl eines geeigneten Elektrolyten bewirkt, dass Vertiefungen in die Bandoberfläche eingebracht werden und Aluminium an den entsprechenden Stellen herausgelöst wird. Vorzugsweise wird das elektro-chemische Körnen derart durchgeführt, dass eine Muldentiefe $S_{vk}$ von 1,0$\mu$m - 6,0 $\mu$m, vorzugsweise 1,5$\mu$m - 4,0 $\mu$m, besonders bevorzugt 2,2 $\mu$m bis 4,0 $\mu$m erzielt wird. Es hat sich gezeigt, dass bei diesen Kennwerten das Umformverhalten des Aluminiumlegierungsbandes in einem nachfolgenden Umformprozess sehr gut ist. Zudem zeigte sich, dass bei dieser Oberflächenbehandlung auch die Alterungsbeständigkeit von Klebstoffverbindungen gesteigert werden konnte.

Vorzugsweise wird das elektro-chemische Körnen mit $HNO_3$ (Salpetersäure) in einer Konzentration von 2,5 - 20g/l, bevorzugt mit 2,5 bis 15 g/l mit Wechselstrom mit einer Frequenz von 50 Hz durchgeführt. Der Ladungsträgereintrag beträgt vorzugsweise mindestens 200 C/dm$^2$, bevorzugt mindestens 500 C/dm$^2$ um eine ausreichende Flächenbelegung mit elektro-chemisch eingebrachten Vertiefungen zu erreichen. Als Peak-Stromdichten werden hierzu mindestens 1 A/dm$^2$, bevorzugt bis 100 A/dm$^2$ und mehr verwendet. Die Wahl der Stromdichten und der Konzentration des Elektrolyten ist abhängig von der Produktionsgeschwindigkeit und kann entsprechend angepasst werden. Insbesondere kann auch über die Temperatur des Elektrolyten die Reaktivität und damit die Produktionsgeschwindigkeit beeinflusst werden. Vorzugsweise kann der Elektrolyt eine Temperatur von maximal 75°C aufweisen. Bei Salpetersäure als Elektrolyt liegt ein bevorzugter Arbeitsbereich zwischen Raumtemperatur und etwa 40 °C, maximal 50 °C. Als Elektrolyt ist neben Salpetersäure auch Salzsäure geeignet.

Bevorzugt erfolgt das elektro-chemische Körnen der Oberfläche des Bandes B im Schritt 5 beidseitig. Es ist aber auch denkbar, dass nur einseitig eine entsprechende Oberflächenstruktur eingebracht wird. Nach dem elektro-chemischen Körnen hat sich ein Spülschritt als besonders vorteilhaft herausgestellt. Anschließend kann gemäß dem in Fig. 5 dargestellten Ausführungsbeispiel in Arbeitsschritt 6 die Aluminiumlegierungsbandoberfläche passiviert werden, beispielsweise durch Aufbringen einer Konversionsschicht. Auch dieser Verarbeitungsschritt ist optional.

Bevorzugt erfolgt im Schritt 7 eine Trocknung bevor im optionalen Schritt 8 gemäß dem dargestellten Ausführungsbeispiel entweder ein Schutzöl oder eine Schicht aufweisend ein Umformhilfe auf das Band, vorzugsweise beidseitig aufgetragen wird. Die Umformhilfe ist vorzugsweise ein Schmierstoff, insbesondere ein schmelzfähiger Trockenschmierstoff, beispielsweise ein Hotmelt. Ein schmelzfähiger Trockenschmierstoff kann als Schutzschicht und Schmierstoff die Handhabung der erfindungsgemäßen Aluminiumlegierungsbänder oder -bleche vereinfachen und gleichzeitig die Umformeigenschaften weiter verbessern. Als Trockenschmierstoff aus nachwachsenden Rohstoffen kann beispielsweise auch Wollwachs verwendet werden.

Alternativ zum Aufwickeln des Bandes B mit der Haspel 11 kann auch ein Zuschnitt zu Blechen über die Bandschere 10 erfolgen. Im Schritt 9 ist eine optische Inspektion des Bandes auf Fehler vorgesehen, so dass Oberflächenfehler frühzeitig erkannt werden.

Wie bereits ausgeführt, zeigt das Ausführungsbeispiel aus Fig. 4 mehrere optionale Arbeitsschritte, welche inline in derselben Fertigungslinie unmittelbar hintereinander durchgeführt werden. Das Ausführungsbeispiel aus Fig. 4 ist daher eine besonders wirtschaftliche Variante des erfindungsgemäßen Verfahrens. Es ist aber auch denkbar, lediglich das Abhaspeln eines Bandes gemäß Schritt 1 und das elektro-chemische Körnen gemäß Schritt 5 mit einem Aufhaspeln oder einem Zuschneiden in Blechzuschnitte zu kombinieren. Grundsätzlich ist auch ein elektro-chemisches Körnen von Blechzuschnitten ist denkbar.

In Fig. 5 ist nun in einer schematischen Schnittansicht ein Ausführungsbeispiel eines erfindungsgemäßen Bandes B dargestellt, welches beidseitig in die Oberfläche eingebrachte Vertiefungen 12 und zusätzlich eine aufgebrachte Schicht eines schmelzfähigen Trockenschmierstoffs 13 aufweist. Ein entsprechendes Band B weist maximale Umformeigenschaften auf und kann zudem problemlos gelagert werden, da die Oberfläche geschützt ist. Entsprechende Bänder B, auch mit einer einseitig gekörnten Oberfläche, können auch als Außenhautteile eines Kraftfahrzeugs verwendet werden, da die Oberfläche vor dem Umformprozess maximal geschützt ist bzw. die Umformung deutlich unterstützt. Aus einem Band B hergestellte Bleche weisen aufgrund des Oberflächenschutzes eine sehr gute Handhabbarkeit im Umformprozess auf und zeigen eine sehr gute Haftung zu Klebstoffen, die darüber hinaus besonders alterungsbeständig ist.

Schließlich wurden sowohl aus einer Aluminiumlegierung vom Typ AA5xxx als auch vom Typ AA6xxx Bleche mit den verschiedenen Oberflächentopografien hergestellt und in Bezug auf deren Oberflächenparameter unter Verwendung eines konfokalen Mikroskops vermessen. Die Bänder der Aluminiumlegierung vom Typ AA5xxx lagen im Zustand "O", die Bänder der Aluminiumlegierung vom Typ AA6xxx im Zustand "T4" vor. Als AA5xxx wurde eine Aluminiumlegierung vom Typ AA 5182 verwendet. Die Aluminiumlegierung der AA6xxx Legierung entsprach einer Alumi- umlegierung vom Typ AA6005C. Die Versuche V1 bis V4 wurden mit einer identischen Aluminiumlegierung vom Typ AA6005C und die Versuche V5 bis V8 mit einer identischen Aluminiumlegierung vom Typ AA5182 gefertigt, um Einflüsse unterschiedlicher Zusammensetzungen innerhalb der Legierungstypen auszuschließen.

Wie die Tabelle 1 zeigt, wurden die Oberflächentopographien der Vergleichsbeispiele V1, V2, V5 und V6 mit konventionellen Verfahren im letzten Walzschritt durch Walzen mit einer Walze mit einer "Mill-Finish"-Oberfläche oder durch Walzprägen dieser eine "Mill-Finish"-Oberfläche aufweisenden Bänder mit einer EDT-texturierten Walze erzeugt.

Die so hergestellten Bänder dienten für die Versuche V3, V4, V7 und V8. Bei den erfindungsgemäßen Ausführungsbeispielen V3, V4, V7 und V8 wurden sowohl die Bänder mit EDT-Walzen geprägten Oberflächen als auch die Bänder mit "Mill-Finish"-Oberflächen mit dem erfindungsgemäßen Verfahren zusätzlich elektro-chemisch gekörnt.

## Tabelle 1

| Nr | | Legierung | Oberfläche | EC-Körnung | Banddicke |
|---|---|---|---|---|---|
| V1 | Vergleich | 6005C | Mill-Finish | Nein | 1,15 mm |
| V2 | Vergleich | 6005C | EDT | Nein | 1,10 mm |
| V3 | Erfindung | 6005C | Mill-Finish | Ja | 1,15 mm |
| V4 | Erfindung | 6005C | EDT | Ja | 1,10 mm |
| V5 | Vergleich | 5182 | Mill-Finish | Nein | 1,15 mm |
| V6 | Vergleich | 5182 | EDT | Nein | 1,10 mm |
| V7 | Erfindung | 5182 | Mill-Finish | Ja | 1,15 mm |
| V8 | Erfindung | 5182 | EDT | Ja | 1,10 mm |

In den Versuchen V1 bis V4 wurde dazu ein warm- und kaltgewalztes Band aus einer Legierung vom Typ AA6005C verwendet. Die Enddicke des Bandes betrug nach dem konventionellen Walzprozess mit einer Mill-Finish-Oberfläche 1,15 mm, Versuche V1 und V3. Ein ebenfalls eine Mill-Finish-Oberfläche aufweisendes Band wurde aus einer Aluminiumlegierung vom Typ AA 5182 hergestellt und für die Versuche V5 und V7 verwendet.

Die Versuche V2, V6 wurden konventionell durch Verwendung EDT-Walzen texturiert. Wie der Tabelle 1 zu entnehmen ist, wurden die EDT-texturierten Oberflächen einem elektro-chemischen Körnen unterzogen und als Versuche V4 und V8 ausgewertet. Gleiches wurde für die Bänder mit "Mill-Finish" Oberflächen beider Aluminiumlegierungen durchgeführt. Die elektro-chemisch gekörnten Bleche wurden als Versuche V3 und V7 ausgewertet. Beim elektro-chemischen Körnen kam legierungsabhängig eine $HNO_3$-Konzentration von 4 g/l bei einem Ladungsträgereintrag von 500 C/ dm$^2$ in den Versuchen V3 und V4 sowie eine $HNO_3$-Konzentration von 5 g/l bei einem Ladungsträgereintrag von 900 C/dm$^2$ bei V7 und V8 zum Einsatz. Die Elektrolyttemperatur betrug bei allen Varianten zwischen 30 °C und 40 °C.

Bei der optischen Vermessung der Oberflächen der Versuchsbleche fällt erwartungsgemäß auf, dass die mittels EDT-texturierter Walzen hergestellten Bleche der Versuche V2, V6 deutlich größere Werte bezüglich des arithmetischen Mittenrauwertes $S_a$ und der reduzierten Spitzenhöhe $S_{pk}$ aufweisen als die Mill-Finish-Oberflächen aufweisenden Bänder der Versuche V1 und V5. Die elektro-chemisch gekörnten Ausführungsbeispiele V3, V4, V7 und V8 zeigten dagegen eine mittlere Rauheit $S_a$ etwa auf dem Niveau der EDT-Oberflächentextur der Versuche V2 und V6. Die gemessenen Werte sind in Tabelle 2 angegeben.

Im Unterschied zur konventionellen Textur steigt beim elektro-chemischen Körnen der Wert für die reduzierte Muldentiefe $S_{vk}$ jedoch um mehr als den Faktor 4, hier um mindestens Faktor 5 an. Hieran können deutlich die Unterschiede in den Texturen abgelesen werden.

Das geschlossene Leervolumen $V_{vcl}$, welches das Volumen für die Bereitstellung von Schmierstoff in Schmierstofftaschen darstellt, ist bei den konventionell mit EDT-Walzen texturierten Bändern V2, V6 mit 362 bzw. 477 mm$^3$/m$^2$ größer im Vergleich zu 151 mm$^3$/m$^2$ bzw. 87 mm$^3$/m$^2$ der "Mill-Finish"- Varianten V1 und V5.

Die elektro-chemisch gekörnten, erfindungsgemäßen Ausführungsbeispiele V3, V4 sowie V7 und V8 zeigen dagegen ein geschlossenes Leervolumen $V_{vcl}$ von mindestens 500 mm$^3$/m$^2$. Das für die Aufnahme von Schmierstoff wichtige geschlossene Leervolumen kann bei den erfindungsgemäßen Bändern, welche einen elektro-chemischen Körnungsschritt durchlaufen haben, um deutlich mehr als 10% gesteigert werden.

Die Muldendichte der Struktur ist mit Werten der erfindungsgemäßen Varianten V3, V4, V7 und V8 von mehr als 80 pro mm$^2$, bevorzugt zwischen 100 und 150, um deutlich mehr als 25 % größer als bei konventionell EDT-texturierten Bandoberflächen der Vergleichsversuche V2 und V6.

Die unterschiedliche Topographie der erfindungsgemäßen Ausführungsbeispiele, welche anhand der unterschiedlichen Werte der reduzierten Muldentiefe $S_{vk}$, des geschlossenen Leervolumens $V_{vcl}$ und der Muldendichte der Oberfläche gekennzeichnet ist, wird für die Verbesserung des Umformverhaltens verantwortlich gemacht. Durch das elektro-chemische Körnen wird ferner auch die Klebstoffhaftung verbessert, sowohl im unbewitterten Ausgangszustand als auch nach klimatischer und/oder korrosiver Belastung.

Im Ergebnis kann damit auch ein umgeformtes Blech, beispielsweise ein Türinnenblech oder ein Außenhautteil eines Kraftfahrzeugs bereitgestellt werden, welches hohe Umformgrade durchläuft, bis es zur endgültigen Form hergestellt ist.

Mit dem erfindungsgemäßen Verfahren und mit dem erfindungsgemäßen Band bzw. Blech kann damit ein noch breiterer Anwendungsbereich für Aluminiumlegierung im Bereich Kraftfahrzeug geöffnet werden, da die größeren Umformgrade weitere Anwendungsmöglichkeiten ermöglichen. Dadurch, dass gleichzeitig die in diesen Bereichen des Kraftfahrzeugs oft verwendeten Klebstoffverbindungen in Bezug auf das Alterungsverhalten verbessert werden, können auch neue Anwendungen im Kraftfahrzeug unter Berücksichtigung der Klebstoffverbindungen ermöglicht werden.

Tabelle 2

| Nr. | | Legierung | $S_a$ μm | $S_{pk}$ μm | $S_k$ μm | $S_{vk}$ μm | Ssk | $n_{clm}$ 1/mm$^2$ | $V_{vcl}$ mm$^3$/m$^2$ |
|---|---|---|---|---|---|---|---|---|---|
| V1 | Vgl. | 6005C | 0,38 | 1,21 | 0,98 | 0,57 | 2,72 | 75 | 151 |
| V2 | Vgl. | 6005C | 0,83 | 1,56 | 2,79 | 0,40 | 0,79 | 66 | 362 |
| V3 | Erf. | 6005C | 0,93 | 0,47 | 1,33 | 3,34 | -1,32 | 123 | 555 |
| V4 | Erf. | 6005C | 1,13 | 1,50 | 3,21 | 2,08 | -0,18 | 94 | 566 |
| V5 | Vgl. | 5182 | 0,37 | 0,51 | 1,21 | 0,37 | 0,32 | 56 | 87 |
| V6 | Vgl. | 5182 | 1,13 | 2,66 | 2,54 | 0,34 | 1,35 | 67 | 477 |
| V7 | Erf. | 5182 | 0,93 | 0,55 | 1,84 | 3,13 | -2,15 | 135 | 605 |

EP 3 408 431 B1

(fortgesetzt)

| Nr. | | Legierung | $S_a$ μm | $S_{pk}$ μm | $S_k$ μm | $S_{vk}$ μm | Ssk | $n_{clm}$ 1/mm² | $V_{vcl}$ mm³/m² |
|---|---|---|---|---|---|---|---|---|---|
| V8 | Erf. | 5182 | 1,19 | 2,42 | 2,87 | 2,03 | 0,56 | 83 | 542 |
| V13 (Lithoblech nach EC-Körnung) | Vgl. | AA1xxx | 0,3-0,6 | 0,2-0,55 | 0,9-1,5 | 0,44-1,1 | -0,85 - 0,32 | 200-240 | <360 |

Da eine elektro-chemische Körnung auch bei der Herstellung von Druckplattenträgern verwendet wird, wurden mehrere EC-gekörnte Lithobleche der Legierung Alxxx vermessen und die Messergebnisse als Versuch V13 zusammengefasst. Lithobleche werden zwar elektro-chemisch aufgeraut, aber die Aufrauung dient einem anderen Zweck. Lithobänder und -bleche werden auch keiner Umformung zugeführt, sondern nach dem elektro-chemischen Aufrauen mit einer lichtempfindlichen Schicht beschichtet. Die Aufrauung soll ein möglichst gleichmäßiges Druckergebnis ermöglichen. Lithobleche und -bänder sind damit im Sinne der vorliegenden Erfindung weder für die Umformung noch für eine Verklebung vorgesehen und vorbereitet. Sie unterscheiden sich grundsätzlich in ihrer Struktur.

Die erfindungsgemäß auf die Bereitstellung von Klebeverbindungen optimierten Oberflächen zeigen in der Topografie deutliche Unterschiede zu Lithoblechen, wie die zusammengefassten Messergebnisse verschiedener, vermessener Lithobleche, dargestellt im Vergleichsbeispiel V13, zeigen. Lithobleche weisen in Regel nicht nur deutlich geringere mittlere Rauheitswerte $S_a$ auf, sondern besitzen auch eine deutlich geringere reduzierte Muldentiefe $S_{vk}$. Die mittlere Muldendichte $n_{clm}$ liegt dagegen leicht über den elektro-chemisch gekörnten, umformoptimierten Oberflächen der erfindungsgemäßen Bleche V3, V4, V7 und V8.

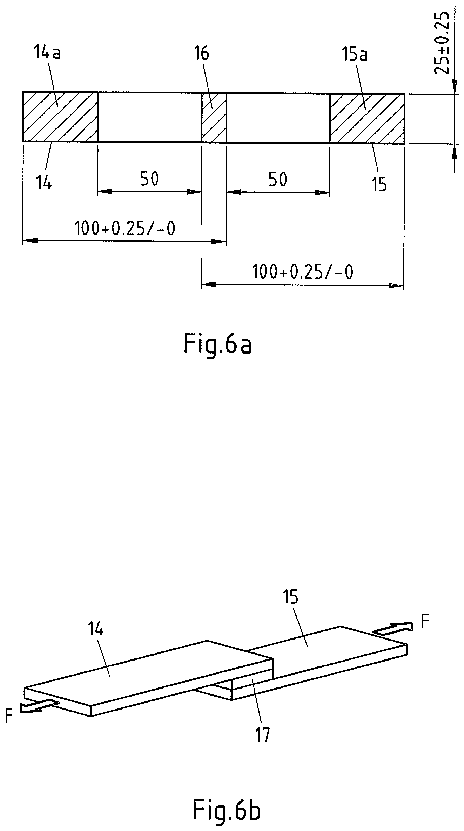

Die Fig. 6a) und 6b) zeigen schematisch die Durchführung der Zugscherversuche von Klebstoffverbindungen zwischen zwei Probekörpern, wobei Fig. 6a) die Anordnung der Probekörper 14 und 15 in einer Draufsicht zeigt. Die Probekörper 14 und 15 werden aus einem Band oder Blech herausgeschnitten. Die Schnittkanten werden entgratet. Die Maße der Probekörper betragen 100 mm in der Länge und 25 mm in der Breite. Von einem etwa 10 bis 14 mm großen Überlappungsbereich 16 der beiden Probekörper 14 und 15 etwa 50 mm entfernt ist ein Spannbereich 14a und 15a vorgesehen. Der Überlappungsbereich ist für die Klebstoffverbindung zwischen den Prüfkörpern 14,15 vorgesehen. Abhängig von der Prüfmaschine kann der Einspannbereich 14a und 15a mit einer Lochung versehen werden. Die Prüfkörper sind entsprechend der Norm DIN EN1465 ausgeführt, wobei der Überlappungsbereich nicht 12,5 mm, sondern wie beschrieben zwischen 10 und 14 mm variieren kann. Die DIN EN 1465 beschreibt die Messung von Zugscherfestigkeiten hochfester Überlappungsverklebungen.

Wie bereits zuvor ausgeführt, sind die Klebstoffe in der Regel auf die ausgelieferten, beispielsweise mit einem Schutzöl, einer Konversionsschicht oder einer anderen organischen Beschichtung versehenen Oberflächen des Aluminiumlegierungsbandes vorbereitet, sodass keine weiteren Oberflächenbehandlungen vor dem Aufbringen des Klebstoff erfolgen muss.

In dem Überlappungsbereich 16 eines der Probekörper 14,15 wird nun der Klebstoff aufgetragen. Um eine einheitliche Dicke der Klebstoffverbindung zu gewährleisten, werden insbesondere beim Prüfen von strukturellen Klebstoffen Glasperlen, beispielsweise mit einem Durchmesser von 0,3 mm in der Klebstoffmasse angeordnet, sodass die Glasperlen eine feste Fugenstärke für die Klebstoffverbindung bei jedem Prüfkörper vorgeben. Um die Überlappungsverklebung im Überlappungsbereich 16 während des Zugversuchs keinen Drehmomenten auszusetzen, erfolgt die Verklebung selbst unter Verwendung von Schablonen, in welcher die Probekörper 14,15 exakt positioniert werden können. Diese Schablonen stellen sicher, dass die Prüfkörper nur exakt zueinander ausgerichtet verklebt werden können. Derartige Schablonen können auch eine Mehrzahl an Probekörpern aufnehmen, sodass gleichzeitig eine Mehrzahl an verklebten Probekörpern ausgehärtet werden können. Die verwendeten Schablonen sind hier nicht dargestellt.

Nach Applikation des Klebstoffs und Positionierung der beiden Probekörper zueinander wird der überschüssige Klebstoff an allen Stirnseiten des Prüfkörpers mit einem Spatel entfernt. Anschließend werden die verklebten Probekörper 14 und 15 ausgehärtet. Die Aushärtung kann beispielsweise in zwei Stufen erfolgen, wobei selbstverständlich die Kenndaten des eingesetzten Klebstoffes zu beachten sind. In den vorliegenden Ausführungsbeispielen wurden die Prüfkörper unter Verwendung des Klebers "Betamate 1630" der Firma Dow Chemical Company verwendet. Die Aushärtung dieses epoxidbasierten Klebstoffes erfolgt in zwei Stufen. In der 1. Stufe wurden die Proben auf 125 °C für 12 Minuten erwärmt. Nach einer Abkühlung auf Raumtemperatur wurden diese dann erneut auf 175 °C für 15 Minuten erwärmt. Die ungealterten Proben wurden dann nach 24 Stunden etwa in Bezug auf die Zugscherfestigkeit der Klebstoffverbindung vermessen. Die zur künstlichen Alterung vorgesehenen Proben wurden 500 Stunden in einem nach Salzsprühtest gemäß DIN EN ISO 9227 gealtert und anschließend in Bezug auf ihre Zugscherfestigkeit untersucht.

Figur 6b) zeigt in einer perspektivischen, schematischen Ansicht die beiden Prüfkörper 14 und 15, welche durch eine Klebstoffverbindung bzw. Klebstofffuge 17 miteinander verbunden sind. Da die Zugscherfestigkeit abhängig von der Überlappungsfläche der Klebstoffverbindung 17 ist, wurden die Flächen der Klebstoffverbindung nach jedem Zugscherversuch jeweils vermessen. Um die Zugscherfestigkeit zu ermitteln, wurden die aufzuwendenden maximalen Kräfte F bis zum Bruch der Klebeverbindung gemessen. Die Zugscherfestigkeit ergibt sich dann beim jeweiligen Prüfkörper durch Division mit den entsprechenden Flächeninhalten der jeweiligen Klebstofffläche.

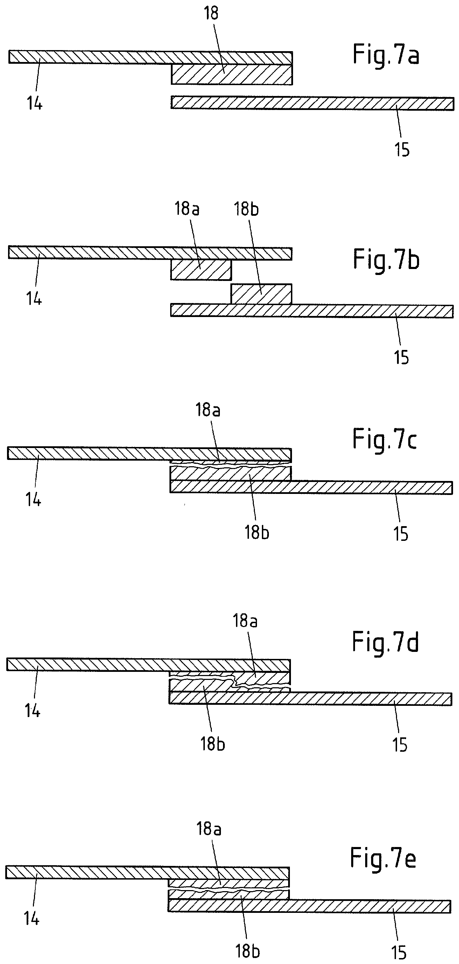

Wie bereits zuvor ausgeführt, ist es ein Ziel bei der Verwendung von Klebstoffverbindungen, beispielsweise im Kraftfahrzeugbau, die Kohäsionskräfte des Klebers auszuschöpfen. Hierzu muss die Adhäsionsverbindung zwischen Klebstoff und Blech also größer sein als die Kohäsionskräfte des Klebstoffes. Die Fig. 7a) bis 7e) zeigen die verschiedenen Bruchbilder der Probekörper, welche in unerwünschte Bruchbilder der Fig. 7a) und 7b) und in die gewünschten Bruchbilder 7c), 7d) und 7e) unterteilt werden können. Bei den unerwünschten Bruchbildern 7a) und 7b) reicht die Adhäsionskraft mit der Oberfläche des Blechs nicht aus, sodass sich der Klebstoff 18 beispielsweise vollständig vom Prüfkörper 15 ablöst. In diesem Fall werden die Kohäsionskräfte des eingesetzten Klebstoffes nicht vollständig ausgenutzt. Das gleiche gilt auch, wenn sich der Klebstoff in einem oder mehreren Teilbereichen 18a, 18b von einem der Prüfkörper 14 oder 15 ablöst. Die in den Figuren 7a) und 7b) dargestellten unerwünschten Bruchbilder der Klebstoffverbindungen konnten bei den erfindungsgemäßen Proben nicht beobachtet werden.

Dagegen zeigen die Fig. 7c), 7d) und 7e) Bruchbilder, bei welchen der Klebstoff 18 vollflächig auf der jeweiligen Seite des Prüfkörpers verblieben ist und die Bruchnaht vollständig durch die Masse des Klebstoff verläuft. In diesem Fall werden die Kohäsionskräfte des Klebstoffs maximal ausgenutzt und eine die maximale Festigkeit des Klebstoffs bereitstellende Klebstoffverbindung steht zur Verfügung.

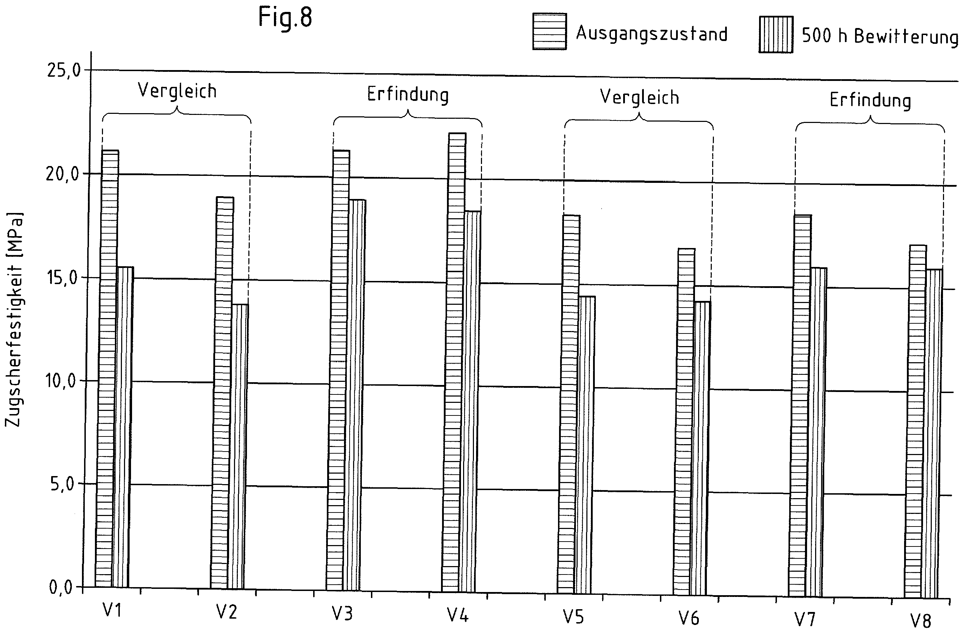

Aus den oben beschriebenen entweder konventionell oder erfindungsgemäß hergestellten Aluminiumlegierungsbändern aus den Legierungen AA6005C oder AA5182 wurden entsprechende Prüfkörper hergestellt und die Zugscherfestigkeiten ermittelt. Dabei wurden zu jedem Versuchsmaterial V1 bis V8 jeweils 5 Prüfkörper hergestellt und einem Zugscherversuch unterzogen. Anschließend wurden die Mittelwerte der gemessenen Zugscherfestigkeiten für die jeweiligen Versuche V1 bis V8 ermittelt und in Figur 8 in einem Diagramm dargestellt. Dabei ist in der schraffierten Säule jeweils die Messung der Zugfestigkeit im Ausgangszustand, also nicht gealtert, dargestellt. Die schwarze Säule zeigt dagegen jeweils die Zugscherfestigkeit nach einem Alterungstest von 500 Stunden gemäß DIN EN ISO 9227.

Die beiden Legierungsgruppen der Versuche V1 bis V4, eine Aluminiumlegierung vom Typ AA6xxx sowie die Versuchsgruppe der Versuche V5 bis V8, eine Aluminiumlegierung vom Typ AA5xxx zeigen unterschiedliche Klebeeigenschaften. Die Versuche V5 bis V8 mit Probekörpern aus einer Aluminiumlegierung AA5182 zeigen Zugscherfestigkeiten, welche unterhalb der der Aluminiumlegierung AA6005C liegen. Man geht davon aus, dass der erhöhte Magnesiumgehalt der Probekörper den Aufbau einer Klebstoffverbindung negativ beeinflusst. Die Probekörper V1 bis V4 weisen, nach dem Einbrennen des Klebstoffs, den für AA6xxx-Aluminiumlegierungen typischen Zustand T6 auf.

Die erfindungsgemäßen Varianten V3, V4 zeigen beispielsweise gegenüber den nicht elektro-chemisch gekörnten Oberflächen der Versuche V1 und V2 eine deutliche Steigerung in Bezug auf die Zugscherfestigkeit der Klebstoffverbindung. Insbesondere kann auch festgestellt werden, dass nach der Alterung die Zugscherfestigkeit der elektrochemisch gekörnten Varianten V3, V4, V7 und V8 gegenüber den unbehandelten Varianten V1, V2, V5 und V6 höher liegt. Beispielsweise fällt die Zugscherfestigkeit bei den elektro-chemisch gekörnten Ausführungsbeispielen nicht unter 15 MPa nach einer Bewitterung ab.

Die einzelnen Messergebnisse können in der Tab. 3 abgelesen werden. Neben der mit der Zugscherversuchsanordnung gemessenen maximalen Zugkraft Fmax ist auch die Zugscherfestigkeit Pmax dargestellt. Wie bereits zuvor erläutert ergibt sich Pmax durch die Division des gemessenen Wertes Fmax mit der gemessenen Fläche der Klebstoffverbindung zwischen den Prüfkörpern. Aus den jeweils ermittelten Werten für Pmax der einzelnen Zugversuche wurde dann der Mittelwert, welcher in der Tab. 3 dargestellt ist, bestimmt. Mit s ist zusätzlich der Bruchweg in Millimetern angegeben. Der Bruchweg entspricht dabei der Strecke, um die sich die Probe bis zum Bruch gestreckt hat. Die soeben genannten Werte Fmax, Pmax und s sind zusätzlich nach einer Bewitterung der Proben für 500 Stunden im Nass-Salz-Sprüh-Test (NSS) gemäß DIN EN ISO 9227 dargestellt. Zusätzlich ist auch die relative Abnahme der Zugscherfestigkeit ∆Pmax dargestellt.

Es zeigte sich auch, dass die erfindungsgemäßen Ausführungsbeispiele in ihren jeweiligen Legierungsbereichen und Oberflächenbereichen deutlich geringere Abnahmen der Zugscherfestigkeiten bei einer Bewitterung aufwiesen. So weist beispielsweise das Vergleichsbeispiel V1 eine Zugscherfestigkeitsabnahme von 25,5 % auf, während das erfindungsgemäße Ausführungsbeispiel mit identischer Ausgangsoberfläche vor dem elektro-chemischen Körnen nur eine Abnahme der Zugscherfestigkeit von 8,9 % nach Bewitterung aufweist. Entsprechend sind jeweils die Paarungen Vergleichsbeispiel V2 mit dem erfindungsgemäßen Ausführungsbeispiel V4 sowie V5 mit V7 und V6 mit V8 zu vergleichen. Im Ergebnis kann die alterungsbedingte Verringerung der Zugscherfestigkeit der Klebstoffverbindung durch das erfindungsgemäße Aluminiumlegierungsband um mehr als 20 % verbessert werden.

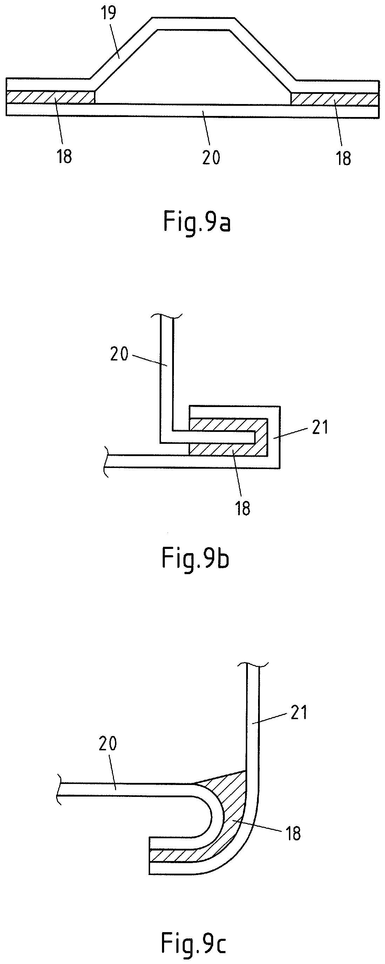

In Fig. 9 sind schematisch drei typische Klebstoffverbindungen, wie sie beispielsweise in Kraftfahrzeugen verwendet werden, dargestellt. Neben der in Figur 9a) dargestellten flächigen Verbindungsnaht, beispielsweise eines Profils 19 mit einem flachen Blech 20 zur Bereitstellung eines Hohlprofils, werden oft auch gebördelte Klebstoffverbindungen zwischen zwei Blechen 21 und 22, wie diese in Figur 9b) und 9c) dargestellt sind, als Klebstoffverbindungen im Kraftfahrzeugbau verwendet. Hier dient der Klebstoff 18 gleichzeitig als Abdichtung. Geklebt werden mit derartigen Klebstoffverbindungen unter anderem Motorhauben, Teile des Türschwellers und Anbauteile im Kofferraumbereich. Die Einsatzmöglichkeiten der Klebstoffverbindungen in Verbindung mit Aluminiumlegierungsblechen können durch die erfindungsgemäßen Aluminiumlegierungsbändern noch weiter ausgebaut werden, da die erfindungsgemäßen Bänder besonders alterungsbeständige Klebstoffverbindungen bereitstellen können.

## Tabelle 3

| Proben Nr. | | Ausgangszustand | | | 500h NSS | | | |
|---|---|---|---|---|---|---|---|---|
| | | Fmax | Pmax | s | Fmax | pmax | s | Δpmax |
| | | N | MPa | mm | N | Mpa | mm | % |
| V1 | Vergleich | 5814 | 20,8 | 1,4 | 4049 | 15,5 | 0,5 | 25,5 |
| V2 | Vergleich | 5754 | 19,0 | 1,8 | 3143 | 14,0 | 0,4 | 26,3 |
| V3 | Erfindung | 5979 | 21,1 | 1,7 | 5620 | 19,2 | 1,3 | 8,9 |
| V4 | Erfindung | 5784 | 22,3 | 1,6 | 4662 | 18,8 | 0,6 | 15,5 |
| V5 | Vergleich | 5136 | 18,5 | 1,6 | 4146 | 14,6 | 0,9 | 20,8 |
| V6 | Vergleich | 4859 | 16,8 | 1,5 | 3949 | 14,6 | 0,8 | 13,3 |
| V7 | Erfindung | 5087 | 18,8 | 1,7 | 4184 | 15,8 | 0,9 | 16,1 |
| V8 | Erfindung | 5274 | 17,1 | 2,0 | 4469 | 15,7 | 1,3 | 8,1 |

## Patentansprüche

1. Verwendung eines Bands aus einer Aluminiumlegierung zur Bereitstellung von Klebstoffverbindungen, insbesondere Klebstoffverbindungen in Kraftfahrzeugen,
   **dadurch gekennzeichnet, dass**
   das Band zumindest bereichsweise eine für eine Klebstoffverbindung vorbereitete Oberflächenstruktur aufweist, wobei die Oberflächenstruktur Vertiefungen aufweist, welche unter Verwendung eines elektro-chemischen Körnungsverfahrens hergestellt worden sind, wobei die zumindest bereichsweise vorgesehene Oberflächenstruktur mindestens auf einer oder auf beiden Seiten des Bandes vorgesehen ist und eine reduzierte Muldentiefe $S_{vk}$ von 1,0 μm bis 6,0 μm aufweist, wobei das Band zumindest teilweise aus einer Aluminiumlegierung vom Typ AA7xxx, Typ AA6xxx, Typ AA5xxx, oder vom Typ AA3xxx besteht.

2. Verwendung eines Bands nach Anspruch 1,
   **dadurch gekennzeichnet, dass**
   das Band zumindest teilweise aus einer Aluminiumlegierung vom Typ AA7020, AA7021, AA7108, AA6111, AA6060, AA6014, AA6016, AA6005C, AA6451, AA5454, AA5754, AA5182, AA5251 oder AlMg6, AA3104, AA3103 besteht.

3. Verwendung eines Bands nach Anspruch 1 oder 2,
   **dadurch gekennzeichnet, dass**
   das Band für die Herstellung von Blechen für Kraftfahrzeuge, insbesondere zur Herstellung von Blechen für Strukturanwendungen von Kraftfahrzeugen ausgebildet ist.

**4.** Verwendung eines Bands nach einem der Ansprüche 1 bis 3,
**dadurch gekennzeichnet, dass**
die zumindest bereichsweise vorgesehene Oberflächenstruktur mindestens auf einer oder auf beiden Seiten des Bandes vorgesehen ist und eine reduzierte Muldentiefe $S_{vk}$ von 1,5 μm bis 4,0 μm, besonders bevorzugt 2,2 μm bis 4,0 μm aufweist.

**5.** Verwendung eines Bands nach einem der Ansprüche 1 bis 4,
**dadurch gekennzeichnet, dass**
das Band den Zustand weichgeglüht ("O") oder lösungsgeglüht und abgeschreckt ("T4") aufweist.

**6.** Verwendung eines Bands nach einem der Ansprüche 1 bis 5,
**dadurch gekennzeichnet, dass**
das Band oder Blech eine nach dem elektro-chemischen Körnen aufgebrachte Passivierungsschicht aufweist.

**7.** Verwendung eines Bands nach einem der Ansprüche 1 bis 6,
**dadurch gekennzeichnet, dass**
die mittlere Rauheit der Oberfläche $S_a$ 0,7 μm bis 1,5 μm, vorzugsweise 0,7 μm bis 1,3 μm oder vorzugsweise 0,8 μm bis 1,2 μm beträgt.

**8.** Verwendung eines Bands nach einem der Ansprüche 2 bis 7 zur Herstellung ein oder mehrerer Bleche durch Zuschneiden des Bandes.

**9.** Verfahren zur Herstellung eines Bands oder eines Blechs mit einer für eine Klebstoffverbindung vorbereiteten ein- oder beidseitigen Oberflächenstruktur,
**dadurch gekennzeichnet, dass**
ein warm- und/oder kaltgewalztes Band oder Blech nach dem Walzen einem elektro-chemischen Körnen (5) unterzogen wird, wobei durch das elektro-chemische Körnen zumindest bereichsweise homogen verteilte Vertiefungen in das Band oder Blech eingebracht werden und das Band oder Blech zumindest teilweise aus einer Aluminiumlegierung vom Typ AA7xxx, Typ AA6xxx, Typ AA5xxx, oder vom Typ AA3xxx, insbesondere AA7020, AA7021, AA7108, AA6111, AA6060, AA6014, AA6016, AA6005C, AA6451, AA5454, AA5754, AA5182, AA5251 oder AlMg6, AA3104, AA3103 besteht, wobei in der Band- oder Blechoberfläche zumindest bereichsweise Vertiefungen mit einer reduzierten Muldentiefe $S_{vk}$ von 1,0 μm bis 6,0 μm durch das elektro-chemische Körnen eingebracht werden.

**10.** Verfahren nach Anspruch 9,
**dadurch gekennzeichnet, dass**
in der Band- oder Blechoberfläche zumindest bereichsweise Vertiefungen mit einer reduzierten Muldentiefe $S_{vk}$ von 1,5 μm bis 4,0 μm oder 2,2 μm bis 4,0 μm durch das elektro-chemische Körnen eingebracht werden.

**11.** Verfahren nach Anspruch 9 oder 10,
**dadurch gekennzeichnet, dass**
das Band oder Blech vor dem elektro-chemischen Körnen einem Reinigungsschritt (4) unterzogen wird, bei welchem durch alkalisches oder saures Beizen die Oberfläche gereinigt und ein homogener Materialabtrag vorgenommen wird.

**12.** Verfahren nach einem der Ansprüche 9 bis 11,
**dadurch gekennzeichnet, dass**
das elektro-chemische Körnen (5) unter Verwendung von $HNO_3$ in einer Konzentration von 2,5 bis 20 g/l mit einem Ladungsträgereintrag von mindestens 200 C/dm$^2$, bevorzugt mindestens 500 C/dm$^2$ durchgeführt wird.

**13.** Verfahren nach einem der Ansprüche 9 bis 12,
**dadurch gekennzeichnet, dass**
nach dem elektro-chemischen Körnen eine Passivierung der Oberfläche, vorzugsweise durch Auftragen einer Konversionsschicht (6) durchgeführt wird.

**14.** Verfahren nach einem der Ansprüche 9 bis 13,
**dadurch gekennzeichnet, dass**
ein Band (B) nach einem Weichglühen (Zustand "O") oder nach einem Lösungsglühen und Abschrecken (Zustand "T4") elektro-chemisch gekörnt wird.

**15.** Verfahren nach einem der Ansprüche 9 bis 14,
**dadurch gekennzeichnet, dass**
die Verfahrensschritte in einer Fertigungslinie inline durchgeführt werden:

- Abwickeln des Bandes von einer Haspel (1),
- Reinigen und Beizen des Bandes(4),
- zumindest bereichsweise elektro-chemisches Körnen des Bandes (5) und
- zumindest bereichsweiser Auftrag einer Umformhilfe und/oder einer Konversionsschicht (6) oder alternativ eines Schutzöls.

**16.** Klebstoffverbindung, insbesondere in einem Kraftfahrzeug, zwischen mindestens zwei Fügepartnern, wobei mindestens ein Fügepartner ein Blech gemäß Anspruch 8 ist und die Klebstoffverbindung in mindestens einem Bereich des Blechs vorgesehen ist, welcher eine durch elektrochemisches Körnen hergestellte Oberflächenstruktur aufweist.

**17.** Band oder Blech aus einer Aluminiumlegierung für eine Verwendung nach Anspruch 1 bis 7,
**dadurch gekennzeichnet, dass**
das Band oder Blech aus einer Aluminiumlegierung vom Typ AA7xxx, Typ AA6xxx, Typ AA5xxx, oder vom Typ AA3xxx besteht, das Band oder Blech zumindest bereichsweise eine für eine Klebstoffverbindung vorbereitete Oberflächenstruktur aufweist, wobei die Oberflächenstruktur Vertiefungen aufweist, welche unter Verwendung eines elektro-chemischen Körnungsverfahrens hergestellt worden sind, die zumindest bereichsweise vorgesehene Oberflächenstruktur mindestens auf einer oder auf beiden Seiten des Bandes vorgesehen ist und eine reduzierte Muldentiefe $S_{vk}$ von 1,0 $\mu$m bis 6,0 $\mu$m oder 1,5 $\mu$m bis 4,0 $\mu$m, besonders bevorzugt 2,2 $\mu$m bis 4,0 $\mu$m aufweist.

**Claims**

**1.** Use of a strip consisting of an aluminium alloy for providing adhesive connections, in particular adhesive connections in motor vehicles,
**characterised in that**
the strip at least in certain areas has a surface structure prepared for an adhesive connection, wherein the surface structure has depressions which were produced using an electrochemical graining process, wherein the surface structure which is at least provided in certain areas is provided on at least one or on both sides of the strip and has a reduced valley depth Svk of 1.0 $\mu$m to 6.0 $\mu$m, wherein the band consists at least partially of an aluminium alloy of the type AA7xxx, type AA6xxx, type AA5xxx or the type AA3xxx.

**2.** Use of a strip according to claim 1,
**characterised in that**
the strip at least partly consists of an aluminium alloy of the type AA7020, AA7021, AA7108, AA6111, AA6060, AA6014, AA6016, AA6005C, AA6451, AA5454, AA5754, AA5182, AA5251 or AlMg6, AA3104, AA3103.

**3.** Use of a strip according to claim 1 or 2,
**characterised in that**
the strip is designed for producing sheets for motor vehicles, in particular for producing sheets for structural applications of motor vehicles.

**4.** Use of a strip according to any one of claims 1 to 3,
**characterised in that**
the surface structure which is at least provided in certain areas is provided on at least one or on both sides of the strip and has a reduced valley depth $S_{vk}$ of 1.5 $\mu$m to 4.0 $\mu$m, particularly preferably 2.2 $\mu$m to 4.0 $\mu$m.

**5.** Use of a strip according to any one of claims 1 to 4,
**characterised in that**
the strip has the state soft-annealed ("O") or solution-annealed and quenched ("T4").

**6.** Use of a strip according to any one of claims 1 to 5,
**characterised in that**
the strip or sheet has a passivation layer which is applied after the electrochemical graining.

7. Use of a strip according to any one of claims 1 to 6,
**characterised in that**
the average roughness of the surface $S_a$ is 0.7 $\mu$m to 1.5 $\mu$m, preferably 0.7 $\mu$m to 1.3 $\mu$m or preferably 0.8 $\mu$m to 1.2 $\mu$m.

8. Use of a strip according to any one of claims 2 to 7 for producing one or more sheets by cutting the strip to size.

9. Method for producing a strip or a sheet having a one or two-sided surface structure which is prepared for an adhesive connection,
**characterised in that**
a hot- and/or cold-rolled strip or sheet is subjected to electrochemical graining (5) after the rolling, wherein homogenously distributed depressions are at least in certain areas introduced into the strip or sheet by the electrochemical graining and the strip or sheet at least partly consists of an aluminium alloy of the type AA7xxx, type AA6xxx, type AA5xxx or of the type AA3xxx, in particular AA7020, AA7021, AA7108, AA6111, AA6060, AA6014, AA6016, AA6005C, AA6451, AA5454, AA5754, AA5182, AA5251 or AlMg6, AA3104, AA3103, wherein depressions with a reduced valley depth $S_{vk}$ of 1.0 $\mu$m to 6.0 $\mu$m are at least in certain areas introduced into the strip or sheet surface by the electrochemical graining

10. Method according to claim 9,
**characterised in that**
depressions with a reduced valley depth $S_{vk}$ of 1.5 $\mu$m to 4.0 $\mu$m or 2.2 $\mu$m to 4.0 $\mu$m are at least in certain areas introduced into the strip or sheet surface by the electrochemical graining.

11. Method according to claim 9 or 10,
**characterised in that**
the strip or sheet is subjected to a cleaning step (4) before the electrochemical graining, in which the surface is cleaned by alkaline or acid pickling and a homogenous removal of material is carried out.

12. Method according to any one of claims 9 to 11,
**characterised in that**
the electrochemical graining (5) is carried out using $HNO_3$ in a concentration of 2.5 to 20 g/l with a charge carrier input of at least 200 C/dm$^2$, preferably at least 500 C/dm$^2$.

13. Method according to any one of claims 9 to 12,
**characterised in that**
after the electrochemical graining a passivation of the surface is carried out, preferably by applying a conversion layer (6).

14. Method according to any one of claims 9 to 13,
**characterised in that**
a strip (B) is electrochemically grained after soft annealing (state"O") or after solution annealing and quenching (state "T4").

15. Method according to any one of claims 9 to 14,
**characterised in that**
the method steps are carried out in-line on a production line:

- uncoiling the strip from a reel (1),
- cleaning and pickling the strip (4),
- at least in certain areas electrochemically graining the strip (5) and
- at least in certain areas applying a forming aid and/or a conversion layer (6) or alternatively a protective oil.

16. Adhesive connection, in particular in a motor vehicle, between at least two join partners, wherein at least one join partner is a sheet according to claim 8 and the adhesive connection is provided in at least one area of the sheet which has a surface structure produced by electrochemical graining.

17. Strip or sheet consisting of an aluminium alloy for a use according to claims 1 to 7,
**characterised in that**

the strip or sheet consists of an aluminium alloy of the type AA7xxx, type AA6xxx, type AA5xxx or of the type AA3xxx, the strip or sheet at least in certain areas has a surface structure prepared for an adhesive connection, wherein the surface structure has depressions which were produced using an electrochemical graining process, the surface structure which is at least provided in certain areas is provided on at least one or on both sides of the strip and has a reduced valley depth $S_{vk}$ of 1.0 $\mu$m to 6.0 $\mu$m or 1.5 $\mu$m to 4.0 $\mu$m, particularly preferably 2.2 $\mu$m to 4.0 $\mu$m.

**Revendications**

1. Utilisation d'une bande en alliage d'aluminium pour la fourniture de joints adhésifs, en particulier joints adhésifs dans des véhicules automobiles,
   **caractérisé en ce que**
   la bande présente, au moins par zones, une structure de surface préparée pour un joint adhésif, dans lequel la structure de surface présente des creux qui ont été produites par un procédé de grainage électrochimique, dans lequel la structure de surface prévue au moins par zones est prévue au moins sur un ou sur les deux côtés de la bande et présente une profondeur de creux réduite $S_{vk}$ de 1,0 $\mu$m à 6,0 $\mu$m, dans lequel la bande est constituée au moins partiellement d'un alliage d'aluminium du type AA7xxx, du type AA6xxx, du type AA5xxx, ou du type AA3xxx.

2. Utilisation d'une bande selon la revendication 1,
   **caractérisé en ce que**
   la bande est constituée au moins partiellement d'un alliage d'aluminium du type AA7020, AA7021, AA7108, AA6111, AA6060, AA6014, AA6016, AA6005C, AA6451, AA5454, AA5754, AA5182, AA5251 ou AlMg6, AA3104, AA3103.

3. Utilisation d'une bande selon la revendication 1 ou 2,
   **caractérisé en ce que**
   la bande est formée pour la fabrication de tôles pour véhicules automobiles, en particulier pour la fabrication de tôles pour des applications structurelles de véhicules automobiles.

4. Utilisation d'une bande selon l'une quelconque des revendications 1 à 3,
   **caractérisé en ce que**
   la structure de surface prévue au moins par zones est prévue au moins sur un ou sur les deux côtés de la bande et présente une profondeur de creux réduite $S_{vk}$ de 1,5 $\mu$m à 4,0 $\mu$m, de manière particulièrement préférée de 2,2 $\mu$m à 4,0 $\mu$m.

5. Utilisation d'une bande selon l'une quelconque des revendications 1 à 4,
   **caractérisé en ce que**
   la bande présente l'état recuit d'adoucissement ("O") ou recuit de mise en solution et trempé ("T4").

6. Utilisation d'une bande selon l'une quelconque des revendications 1 à 5,
   **caractérisé en ce que**
   la bande ou la tôle présente une couche de passivation appliquée après le grainage électrochimique.

7. Utilisation d'une bande selon l'une quelconque des revendications 1 à 6,
   **caractérisé en ce que**
   la rugosité de surface moyenne $S_a$ est de 0,7 $\mu$m à 1,5 $\mu$m, préférentiellement de 0,7 $\mu$m à 1,3 $\mu$m ou préférentiellement de 0,8 $\mu$m à 1,2 $\mu$m.

8. Utilisation d'une bande selon l'une quelconque des revendications 2 à 7 pour la fabrication d'une ou plusieurs tôles au moyen de la découpe de la bande.

9. Procédé de fabrication d'une bande ou d'une tôle avec une structure de surface préparée pour un joint adhésif sur un ou sur les deux faces,
   **caractérisé en ce que**
   une bande ou une tôle laminée à chaud et/ou à froid est soumise après le laminage à un grainage électrochimique (5), dans lequel des creux répartis de manière homogène sont introduits au moins par zones dans la bande ou la tôle par le grainage électrochimique et la bande ou la tôle est au moins partiellement constituée d'un alliage d'aluminium du type AA7xxx, type AA6xxx, type AA5xxx, ou du type AA3xxx, en particulier AA7020, AA7021, AA7108, AA6111, AA6060, AA6014, AA6016, AA6005C, AA6451, AA5454, AA5754, AA5182, AA5251 ou AlMg6, AA3104, AA3103, dans lequel des creux avec une profondeur de creux réduite $S_{vk}$ de 1,0 $\mu$m à 6,0 $\mu$m sont introduits au moins par zones dans la surface de la bande ou de la tôle par le grainage électrochimique.

10. Procédé selon la revendication 9,
    **caractérisé en ce que**
    des creux avec une profondeur de creux réduite $S_{vk}$ de 1,5 $\mu$m à 4,0 $\mu$m ou de 2,2 $\mu$m à 4,0 $\mu$m sont introduits au moins par zones dans la surface de la bande ou de la tôle par le grainage électrochimique.

11. Procédé selon la revendication 9 ou 10,
    **caractérisé en ce que**
    la bande ou la tôle est soumise à une étape de nettoyage (4) avant le grainage électrochimique, au cours de laquelle la surface est nettoyée par décapage alcalin ou acide et un enlèvement de matière homogène est effectué.

12. Procédé selon l'une quelconque des revendications 9 à 11,
    **caractérisé en ce que**
    le grainage électrochimique (5) est exécuté en utilisant du $HNO_3$ à une concentration de 2,5 à 20 g/l avec un apport de porteurs de charge d'au moins 200 C/dm$^2$, préférentiellement au moins 500 C/dm$^2$.

13. Procédé selon l'une quelconque des revendications 9 à 12,
    **caractérise en ce que**
    après le grainage électrochimique, une passivation de la surface est exécuté, de préférence par application d'une couche de conversion (6).

14. Procédé selon l'une quelconque des revendications 9 à 13,
    **caractérise en ce que**
    une bande (B) est grainée électrochimiquement après recuit d'adoucissement (état "O") ou après recuit de mise en solution et trempe (état "T4").

15. Procédure selon l'une quelconque des revendications 9 à 14,
    **caractérise en ce que**
    les étapes du procédé sont exécutées en ligne dans une ligne de production:

    - déroulement de la bande d'un dévidoir (1),
    - nettoyage et décapage de la bande (4),
    - grainage électrochimique de la bande (5) au moins par zones, et
    - application au moins par zones d'un auxiliaire de formage et/ou d'une couche de conversion (6) ou, en variante, d'une huile de protection.

16. Joint adhésif, en particulier dans un véhicule automobile, entre au moins deux pièces d'assemblage, dans laquelle au moins une pièce d'assemblage est une tôle selon la revendication 8 et le joint adhésif est prévu dans au moins une zone de la tôle qui présente une structure de surface produite par grainage électrochimique.

17. Bande ou tôle en alliage d'aluminium pour une utilisation selon les revendications 1 à 7,
    **caractérise en ce que**
    la bande ou la tôle est constituée d'un alliage d'aluminium du type AA7xxx, type AA6xxx, type AA5xxx ou du type AA3xxx, la bande ou la tôle présentant, au moins par zones, une structure de surface préparée pour un joint adhésif, dans lequel la structure de surface présente des creux qui ont été produites par un procédé de grainage électrochimique, la structure de surface prévue au moins par zones étant prévue au moins sur un ou sur les deux côtés de la bande et présentant une profondeur de creux réduite $S_{vk}$ de 1,0 $\mu$m à 6,0 $\mu$m ou de 1,5 $\mu$m à 4,0 $\mu$m, de manière particulièrement préférée de 2,2 $\mu$m à 4,0 $\mu$m.

Fig.1

| 20 μm | Mag= 250X | EHT= 10.00kV | Signal A= SE2 |
| | File Name= 003.tif | WD= 8.0mm | |

Fig.2

| 20 μm | Mag= 250X | EHT= 10.00kV | Signal A= SE2 |
| | File Name= 033.tif | WD= 6.0mm | |

Fig.3

Fig.4

Fig.5

14a                    16                    15a                    25±0.25

14                50              50                  15

100+0.25/−0

100+0.25/−0

## Fig.6a

14                    15                    F

17                    F

## Fig.6b

18

Fig.7a

14

15

18a  18b

Fig.7b

14

15

18a

Fig.7c

14

18b  15

18a

Fig.7d

14

18b  15

18a

Fig.7e

14

18b  15

Fig.8

**Legend:** Ausgangszustand | 500 h Bewitterung

Zugscherfestigkeit [MPa]

Vergleich · Erfindung · Vergleich · Erfindung

V1 V2 V3 V4 V5 V6 V7 V8

EP 3 408 431 B1

Fig.9a

Fig.9b

Fig.9c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080102404 A1

- US 20050205167 A1